# EUROPEAN PATENT APPLICATION

(11) **EP 4 620 645 A1**
(43) Date of publication of application: **24.09.2025**
(21) Application number: 23890902.2
(22) Date of filing: 17.11.2023
(51) Int. Cl.: B28D 7/00

(54) **TENSION MECHANISM, WIRE SAW UNIT, AND WIRE CUTTING MACHINE**

(30) Priority: 19.11.2022 CN 202211450296; 19.11.2022 CN 202211450346; 19.11.2022 CN 202211450342; 19.11.2022 CN 202223077250 U; 19.11.2022 CN 202223077304 U; 19.11.2022 CN 202223077303 U
(71) Applicant: Qingdao Gaoce Technology Co., Ltd, Qingdao, Shandong 266114 (CN)
(72) Inventor: ZHANG, Lu, Qingdao, Shandong 266114 (CN); YIN, Yangang, Qingdao, Shandong 266114 (CN)
(74) Representative: Patentanwaltskanzlei Matschnig & Forsthuber OG
(86) International application number: PCT/CN2023/132419
(87) International publication number: WO 2024/104474

(57) **Abstract**

A tension mechanism, comprising a tension swing rod assembly (24) and a drive assembly that can provide torque for the tension swing rod assembly (24). The tension mechanism further comprises: a tension rotation assembly (25), which is rotatably connected to the tension swing rod assembly (24); and a tension wheel (21), around which a cutting wire is wound, wherein the tension wheel (21) is rotatably connected to the tension rotation assembly (25). When the tension wheel (21) is stressed due to deviation of the cutting wire, the tension wheel (21) drives the tension rotation assembly (25) to synchronously rotate relative to the tension swing rod assembly (24), so as to reduce the friction between the cutting wire and the tension wheel (21) due to the deviation of the cutting wire to reduce the wear of the tension wheel (21) and the cutting wire, reducing the risk of the cutting wire escaping from a slot and breaking, which is conducive to improving the cutting quality and efficiency. The present invention further relates to a wire saw unit and a wire cutting machine.

## Description

### CROSS-REFERENCE TO RELATED APPLICATION

The present disclosure claims priorities to the Chinese Patent Application No. 202211450296.8, titled "TENSION MECHANISM, WIRE SAW UNIT, AND WIRE CUTTING MACHINE", filed on November 19, 2022; the Chinese Patent Application No. 202211450346.2, titled "TENSION MECHANISM, WIRE SAW UNIT, AND WIRE CUTTING MACHINE", filed on November 19, 2022; the Chinese Patent Application No. 202211450342.4, titled "TENSION MECHANISM, WIRE SAW UNIT, AND WIRE CUTTING MACHINE", filed on November 19, 2022; the Chinese Patent Application No. 202223077250.4, titled "TENSION MECHANISM, WIRE SAW UNIT, AND WIRE CUTTING MACHINE", filed on November 19, 2022; the Chinese Patent Application No. 202223077304.7, titled "TENSION MECHANISM, WIRE SAW UNIT, AND WIRE CUTTING MACHINE", filed on November 19, 2022; and the Chinese Patent Application No. 202223077303.2, titled "TENSION MECHANISM, WIRE SAW UNIT, AND WIRE CUTTING MACHINE", filed on November 19, 2022, the entire contents of which are incorporated herein by reference.

### TECHNICAL FIELD

The present disclosure relates to the technology of cutting devices for hard and brittle materials, and in particular to a tension mechanism, a wire saw unit, and a wire-cutting machine.

### BACKGROUND ART

The wire-cutting machine is a device that cuts a workpiece into blocks, segments, or slices by using a cutting wire. The wire-cutting machine includes: a cutting main roller, a tension wheel, and a wire winding/unwinding roller, wherein the cutting wire moves reciprocally between the cutting main roller, the tension wheel, and the wire winding/unwinding roller to cut the workpiece.

In order to adjust the tension of the cutting wire in real-time during the operation of the wire-cutting machine, the wire-cutting mechanism is provided with a tension mechanism, wherein the tension mechanism includes a tension swing arm and a tension wheel, and the tension wheel is rotatably arranged on the end of the tension swing arm, so that the cutting wire can be extended after winding the wire groove of the tension wheel. During the operation of the wire-cutting machine, it is inevitable that the cutting wire will deflect when entering or leaving the tension wheel. In other words, the cutting wire deviates from the center of the tension wheel wire groove. As a result, the friction between the cutting wire and the tension wheel wire groove is increased, which results in the wear of the cutting wire and increases the risk of wire breakage. Moreover, the cutting wire can be disengaged from the tension wheel, thereby affecting the quality and efficiency of cutting.

### SUMMARY

In order to solve one of the above technical problems, the embodiments of the present disclosure provide a tension mechanism, a wire saw unit, and a wire-cutting machine.

According to a first aspect of the embodiments of the present disclosure, a tension mechanism is provided, including a tension swing arm assembly, and a driving assembly capable of providing torque to the tension swing arm assembly, and further including:
a tension rotation assembly, rotatably connected to the tension swing arm assembly; and
a tension wheel capable of being wound by a cutting wire, wherein the tension wheel is rotatably connected to the tension rotation assembly, and the tension wheel drives the tension rotation assembly to rotate together relative to the tension swing arm assembly when the tension wheel is stressed due to deflection of the cutting wire.

According to a second aspect of the embodiments of the present disclosure, a tension mechanism is provided, including a tension swing arm assembly, and a driving assembly capable of providing torque to the tension swing arm assembly, and further including:
a tension base, wherein the tension swing arm assembly is rotatably connected to the tension base; and
a tension wheel capable of being wound by a cutting wire, rotatably connected to the tension swing arm assembly.

The tension swing arm assembly is connected to the driving assembly by a rotation mechanism for adjusting a rotation of the tension swing arm assembly relative to the tension base to adjust a tension of the cutting wire, and the driving assembly is further connected to the tension base by the rotation mechanism. The tension wheel, together with the tension swing arm assembly and the tension base, rotates relative to the driving assembly when the tension wheel is stressed due to the deflection of the cutting wire.

According to a third aspect of the embodiments of the present disclosure, a wire saw unit is provided, including a cutting mechanism, a wire winding/unwinding mechanism, and the tension mechanism described above;
a cutting mechanism;
a wire winding/unwinding mechanism including a wire winding/unwinding roller for storing or releasing the cutting wire; and
a tension mechanism as described above.

Therefore, the tension wheel rotates when subjected to a deflecting tension of the reciprocating cutting wire between the wire winding/unwinding roller, the tension wheel, and the cutting mechanism.

According to a fourth aspect of embodiments of the present disclosure, a wire-cutting machine is provided, including the wire saw unit described above.

In the technical solutions provided by the embodiment, the tension rotation assembly is rotatably connected to the tension swing arm assembly, the tension wheel is rotatably connected to the tension rotation assembly, and the tension wheel drives the tension rotation assembly to rotate together relative to the tension swing arm assembly when the tension wheel is stressed due to deflection of the cutting wire. Thus, the friction between the cutting wire and the tension wheel due to the deflection of the cutting wire is reduced, the wear between the tension wheel and the cutting wire is reduced, thereby reducing the risk of the cutting wire dislodgement or breakage and helping to improve the quality and efficiency of cutting.

### BRIEF DESCRIPTION OF DRAWINGS

The drawings described herein are used to provide a further understanding of the present disclosure and form a part of the present disclosure, and schematic embodiments of the present disclosure and their description are used to illustrate the present disclosure and do not constitute an improper limitation of the present disclosure. In the figures:
FIG. 1 shows a structure schematic diagram of a wire saw unit of a slicer provided by an embodiment of the present disclosure;
FIG. 2 shows a structure schematic diagram of a tension mechanism provided by an embodiment of the present disclosure;
FIG. 3 shows a schematic diagram of a partial structure in a tension mechanism provided by an embodiment of the present disclosure;
FIG. 4 shows a front view of a tension mechanism at a middle position provided by one embodiment of the present disclosure;
FIG. 5 shows a structure schematic diagram of a tension mechanism swinging to one side to adapt a change in the tension of a cutting wire provided by an embodiment of the present disclosure;
FIG. 6 shows a structure schematic diagram of a tension mechanism swinging to the other side to adapt a change in the tension of a cutting wire provided by an embodiment of the present disclosure;
FIG. 7 shows a side view of a tension mechanism at a middle position provided by one embodiment of the present disclosure;
FIG. 8 shows a structure schematic diagram of a tension wheel in a tension mechanism generating a deflection to adapt to a change in the angle of the cutting wire provided by an embodiment of the present disclosure;
FIG. 9 shows a three-dimensional view of a tension swing arm assembly in a tension mechanism provided by an embodiment of the present disclosure;
FIG. 10 shows a front view of a tension swing arm assembly in a tension mechanism provided by an embodiment of the present disclosure;
FIG. 11 shows a three-dimensional view of a tension rotation assembly in a tension mechanism provided by an embodiment of the present disclosure;
FIG. 12 is a sectional view of one end of a tension rotation assembly connected with a tension swing arm assembly in a tension mechanism provided by an embodiment of the present disclosure;
FIG. 13 is a sectional view of the other end of a tension rotation assembly connected with a tension swing arm assembly in a tension mechanism provided by an embodiment of the present disclosure;
FIG. 14 shows a structure schematic diagram of a rotation damper in a tension mechanism provided by an embodiment of the present disclosure;
FIG. 15 shows an explosion view of a rotation damper in a tension mechanism provided by an embodiment of the present disclosure;
FIG. 16 shows a side view of a rotation damper in a tension mechanism provided by an embodiment of the present disclosure;
FIG. 17 shows a side view of another state of a rotation damper in a tension mechanism provided by an embodiment of the present disclosure;
FIG. 18 shows a structure schematic diagram of a counterweight assembly in a tension mechanism provided by an embodiment of the present disclosure;
FIG. 19 is a structure schematic diagram of a tension mechanism provided by another embodiment of the present disclosure;
FIG. 20 shows a schematic diagram of partial structure in a tension mechanism provided by another embodiment of the present disclosure;
FIG. 21 shows a front view of partial structure in a tension mechanism provided by another embodiment of the present disclosure;
FIG. 22 shows a left view of partial structure in a tension mechanism provided by another embodiment of the present disclosure;
FIG. 23 shows a front view of a tension mechanism at a middle position provided by another embodiment of the present disclosure;
FIG. 24 shows a structure schematic diagram of a tension mechanism swinging to one side to adapt a change in the tension of a cutting wire provided by another embodiment of the present disclosure;
FIG. 25 shows a structure schematic diagram of a tension mechanism swinging to the other side to adapt a change in the tension of a cutting wire provided by another embodiment of the present disclosure;
FIG. 26 shows a side view of a tension mechanism at a middle position provided by another embodiment of the present disclosure;
FIG. 27 shows a structure schematic diagram of a tension wheel in a tension mechanism generating a deflection to adapt to a change in the angle of the cutting wire provided by another embodiment of the present disclosure;
FIG. 28 shows a three-dimensional view of a tension swing arm in a tension mechanism provided by another embodiment of the present disclosure;
FIG. 29 shows a sectional view at A-A in FIG. 21;
FIG. 30 shows a partial sectional view of FIG. 21;
FIG. 31 shows a three-dimensional view of a counterweight assembly in a tension mechanism provided by another embodiment of the present disclosure;
FIG. 32 is a structure schematic diagram of a tension mechanism provided by another embodiment of the present disclosure;
FIG. 33 shows a side view of a tension mechanism at a middle position provided by another embodiment of the present disclosure;
FIG. 34 shows a structure schematic diagram of a tension wheel in a tension mechanism generating a deflection to adapt to a change in the angle of the cutting wire provided by another embodiment of the present disclosure;
FIG. 35 shows a front view of a tension mechanism at a middle position provided by another embodiment of the present disclosure;
FIG. 36 shows a structure schematic diagram of a tension mechanism swinging to one side to adapt a change in the tension of a cutting wire provided by another embodiment of the present disclosure;
FIG. 37 shows a structure schematic diagram of a tension mechanism swinging to the other side to adapt a change in the tension of a cutting wire provided by another embodiment of the present disclosure;
FIG. 38 is a structure schematic diagram of a tension swing arm assembly in a tension mechanism provided by another embodiment of the present disclosure;
FIG. 39 shows a structure schematic diagram of a tension swing arm assembly cooperating with a tension transmission mechanism in a tension mechanism provided by another embodiment of the present disclosure;
FIG. 40 is a structure schematic diagram of a limiting member in a tension mechanism provided by another embodiment of the present disclosure;
FIG. 41 is a structure schematic diagram of a rotation mechanism in a tension mechanism provided by another embodiment of the present disclosure;
FIG. 42 is a structure schematic diagram of a tension base in a tension mechanism provided by another embodiment of the present disclosure;
FIG. 43 shows a sectional view of the connection of a rotation damper in a tension mechanism provided by another embodiment of the present disclosure; and
FIG. 44 shows a structure schematic diagram of a counterweight assembly in a tension mechanism provided by another embodiment of the present disclosure.

### Reference numbers:

11-cutting main roller;
21-tension wheel; 22-tension motor; 23-motor mounting plate;
24-tension swing arm assembly; 240-avoidance hole; 241-tension swing arm; 242-driving connection part; 243-rotation connection part; 244-driving connection hole; 245-first adjustment slit; 246-first fastening hole; 247-rotary shaft; 248-mounting base; 249-second fastening hole; 2410-first swing arm; 2411-shaft hole; 2412-second adjustment slit; 2413-third fastening hole; 2414-second swing arm; 2415-tension wheel connection part;
25-tension rotation assembly; 251-first rotation arm; 252-first rotary shaft; 253-second rotary shaft; 254-second rotation arm; 255-sleeve; 256-adapter plate; 257-first bearing; 258-shaft box body; 259-second bearing; 2510-tension wheel connection arm;
26-rotation damper; 261-oil baffle plate; 262-damping end cover; 263-damping compression ring; 264-damping guide rail; 2641-guide rail connecting disk; 2642-guide protrusion; 265-damping piston; 2651-damping hole; 266-O-ring; 267-damping shaft; 268-damping bearing;
27-counterweight assembly; 271-counterweight bracket; 272-adjustment block; 273-first counterweight rod; 274-first counterweight block; 275-second counterweight rod; 276-second counterweight block; 277-adjustment screw;
28-limiting member; 281-limiting base; 282-limiting protrusion;
29-tension transmission mechanism; 291-driving transmission member; 292-driven transmission member;
31-wire winding/unwinding roller;
32-tension base; 321-first mounting base; 322-first mounting arm; 323-second mounting base; 324-third mounting base; 325-second mounting arm;
33-rotation mechanism; 331-input shaft; 332-output shaft; 333-universal adjustment assembly;
4-silicon rod;
5-cutting wire; and
6-detection device.

### DETAILED DESCRIPTION OF EMBODIMENTS

In order to make the technical solutions and advantages in the embodiments of the present disclosure clearer and more understandable, the exemplary embodiments of the present disclosure are described in further detail below in conjunction with drawings. It is clear that the described embodiments are only a part of the embodiments of the present disclosure, and are not an exhaustive list of all embodiments. It is noted that the embodiments and features in the embodiments of the present disclosure can be combined with each other without conflict.

One embodiment of the present disclosure provides a tension mechanism capable of being applied to a wire-cutting machine to cut a workpiece. The workpiece can be a hard and brittle material rod such as a monocrystalline silicon material rod, polycrystalline silicon material rod, sapphire rod, and magnetic material rod. The embodiment takes the silicon material rod (referred to as: silicon rod) as an example to provide a detailed description of the tension mechanism. A person skilled in the art can also apply the technical solutions provided in the embodiment to cut other material rods.

The wire-cutting machine can be a truncating machine, a squaring machine, or a slicer, wherein the truncating machine is used to cut a longer silicon rod into silicon rods of shorter length; the squaring machine is used to cut a silicon rod with a circular cross section into a silicon rod with a rectangular cross section; and the slicer is used to cut a silicon rod with a rectangular cross section into a thin slice. The embodiment takes the slicer as an example to provide a detailed description of the tension mechanism. A person skilled in the art can also apply the technical solutions provided in the embodiment to other wire-cutting machines.

The slicer provided by one embodiment of the present disclosure includes a machine frame, a wire saw unit, an electric control device, and a cooling device, etc., wherein the wire saw unit, the electric control device, the cooling device, and other components are arranged on the machine frame. The electric control device, the cooling device, and other components can be arranged in accordance with the traditional solutions.

One embodiment of the present disclosure provides a wire saw unit, including: a cutting mechanism, a tension mechanism, and a wire winding/unwinding mechanism. The cutting wire moves reciprocally between the wire winding/unwinding mechanism, the tension mechanism, and the cutting mechanism to cut the silicon rod.

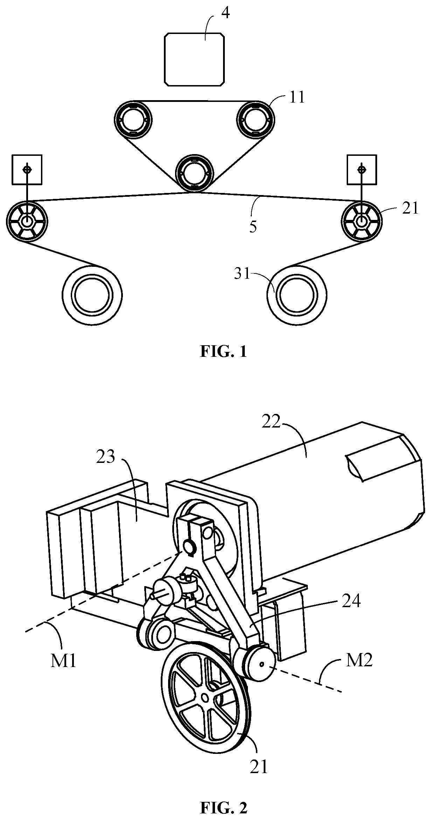

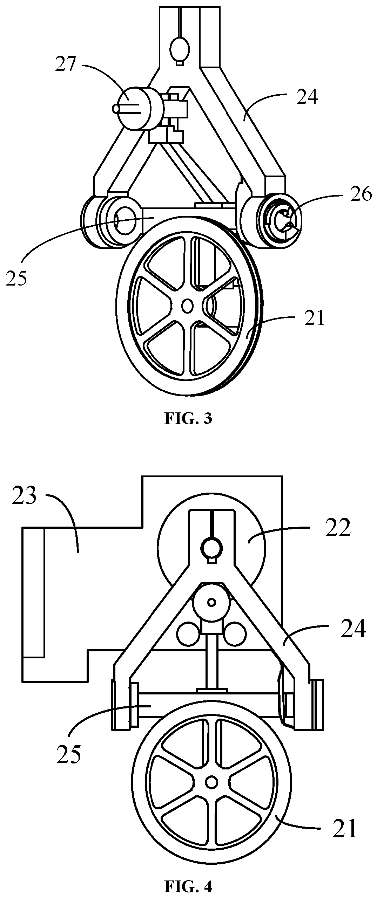

As shown in FIG. 2 and FIG. 3, the tension mechanism provided by one embodiment of the present disclosure includes: a tension swing arm assembly 24, a tension rotation assembly 25, a driving assembly, and a tension wheel 21, wherein the driving assembly provides torque to the tension swing arm assembly to rotate the tension swing arm assembly. The tension rotation assembly 25 is rotatably connected to the tension swing arm assembly 24.

The tension wheel 21 can be provided a cutting wire thereon, and the tension wheel 21 is rotatably connected to the tension rotation assembly 25, so that the tension wheel 21 is free to rotate relative to the tension rotation assembly 25, so as to guide the cutting wire. When the tension wheel is stressed due to the deflection of the cutting wire, the tension wheel 21 drives the tension rotation assembly 25 to rotate together relative to the tension swing arm assembly 24, so as to reduce friction between the cutting wire and the tension wheel due to the deflection of the cutting wire.

In the technical solutions provided by the embodiment, the tension rotation assembly is rotatably connected to the tension swing arm assembly; the tension wheel is rotatably connected to the tension rotation assembly; and the tension wheel drives the tension rotation assembly to rotate together relative to the tension swing arm assembly when the tension wheel is stressed due to deflection of the cutting wire, so as to reduce friction between the cutting wire and the tension wheel due to the deflection of the cutting wire. This reduces the wear between the tension wheel and the cutting wire and the risk of the cutting wire being out of the groove and broken, which is beneficial to improve the quality and efficiency of cutting.

One embodiment of the present disclosure provides an application scenario by examples. As shown in FIG. 1, the cutting mechanism includes three cutting main rollers 11 arranged in the shape of a triangle, wherein two cutting main rollers 11 are arranged above and one cutting main roller 11 is arranged below. The wire winding/unwinding mechanism includes a wire winding/unwinding roller 31 for storing or releasing the cutting wire, so that the cutting wire moves reciprocally between the wire winding/unwinding roller 31, the tension wheel 21, and the cutting mechanism. The tension wheel 21 and the wire winding/unwinding roller 31 are both located on the side of the cutting mechanism, and the wire winding/unwinding roller 31 is lower than the tension wheel 21 on the same side.

The tension wheel 21 and the wire winding/unwinding roller 31 are arranged in one-to-one correspondence, so as to guide the cutting wire wound out of the tension wheel 21 to the wire winding/unwinding roller 31, or to guide the cutting wire released by the wire winding/unwinding roller 31 to the tension wheel 21.

After the cutting wire 5 is released from the wire winding/unwinding roller 31 on the left side, it is wound diagonally upward around the tension wheel 21 on the left side, and enters into the cutting mechanism from the bottom of the lower cutting main roller 11 in a winding manner. the cutting wire 5, after wound around the three cutting main rollers 11 in a counterclockwise direction for several turns, unwinds from the bottom of the lower cutting main roller 11, passes around the tension wheel 21 on the right side, and is obliquely stored on the wire winding/unwinding roller 31 on the right side. The cutting wire 5 between the two cutting main rollers 11 on the upper side is configured to cut a silicon rod 4 moving downwardly.

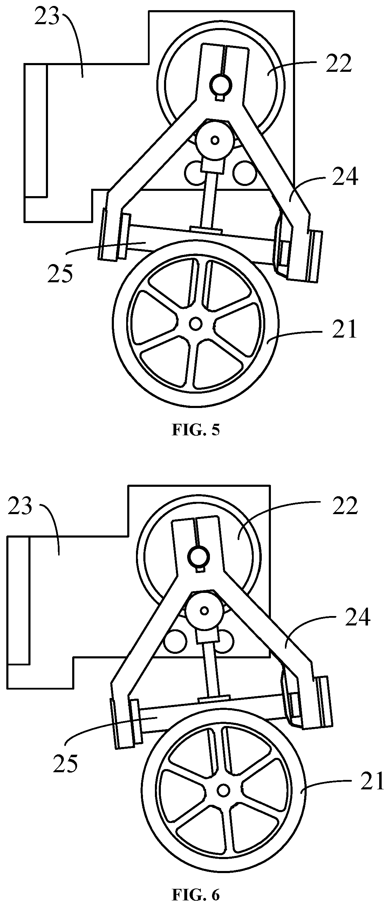

In one specific embodiment, the cutting wire released by the wire winding/unwinding roller 31 enters the tension wheel 21 from the bottom and is guided from the upper end of the tension wheel 21 to the cutting main roller 11; the driving assembly provides an initial constant torque for the tension swing arm assembly; and the cutting wire is wound around the tension wheel. As shown in FIG. 4, the tension wheel 21 is located at the middle position. When the moment of force generated by the tension of the cutting wire is larger than the torque of the driving assembly, the cutting wire pulls the tension swing arm assembly to rotate toward the direction of the cutting wire, so as to reduce the tension of the cutting wire, as shown in FIG. 5; and when the moment of force generated by the tension of the cutting wire is smaller than the torque of the driving assembly, the driving assembly drives the tension swing arm assembly to rotate away from the cutting wire, so as to increase the tension of the cutting wire, as shown in FIG. 6. By this cycle, the tension of the cutting wire is kept in a stable range.

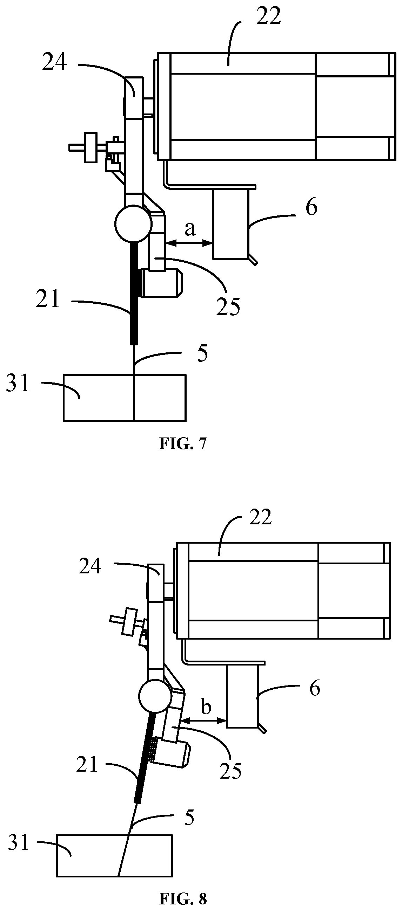

FIG. 7 shows an ideal state. The plane where the tension wheel 21 is located is basically perpendicular to the rotation axis of the wire winding/unwinding roller 31, or a smaller angle is provided between the rotation axis of the tension wheel 21 and the rotation axis of the wire winding/unwinding roller 31. The cutting wire is wound in or out of the wire winding/unwinding roller 31 in a basically perpendicular state. There will be no significant friction between the cutting wire and the wire groove of the tension wheel so the risk of wire breakage is lower.

When the cutting wire entering or leaving the wire groove of the tension wheel is deflected, i.e., when the cutting wire deviates from the center of the wire groove and the tension wheel 21 is stressed due to the deflection of the cutting wire, the tension wheel 21 rotates relative to the tension swing arm assembly 24. As shown in FIG. 8, the tension wheel 21 is in an inclined state along the routing direction of the cutting wire, which reduces the angle between the cutting wire and the wire groove of the tension wheel, thereby reducing the wear between the cutting wire and the tension wheel and reducing the probability of wire dislodgement or breakage.

The above cutting mechanism provided in the embodiment is only one implementation method, and the number and layout of the cutting main roller11 can also adopt other methods. For example, two cutting main rollers 11 are arranged side by side, and four cutting main rollers are arranged in a rectangular shape.

The above relative position of the tension wheel 21, the wire winding/unwinding roller 31, and the cutting main roller 11 arranged in the embodiment is also an implementation method, and other methods can also be adopted. For example, all tension wheels 21 and wire winding/unwinding rollers 31 are located on the same side of the cutting mechanism, and the cutting wire can also be wound in or out from the top of the cutting main roller.

The tension wheel 21 is provided with a wire groove capable of winding the cutting wire. Under normal conditions, the cutting wire moves in the wire groove of the tension wheel 21. However, when the cutting wire is deflected, the cutting wire will deflect from the wire groove, which has a risk of being out of the groove.

The driving assembly provides the tension swing arm assembly 24 with a constant torque in the direction opposite to the tension of the cutting wire. When the moment of force of the cutting wire is larger than the torque of the driving assembly, the cutting wire pulls the tension swing arm assembly to rotate toward the cutting wire and vice versa, thereby realizing the tension adjustment.

Further, the driving assembly can be a hydraulic drive, an air drive, or an electric drive. The embodiment uses the tension motor 22 as a driving assembly, where the tension swing arm assembly 24 is connected to the output shaft of the tension motor 22, and the tension motor 22 can be mounted to the machine frame via a motor mounting plate 23. The axis of the tension motor 22 is a first rotation axis M1, and the tension swing arm assembly 24 can rotate relative to the tension motor 22 along the first rotation axis M1.

The tension motor 22 provides the tension swing arm assembly 24 with a constant torque, so that the tension swing arm assembly 24 and the tension wheel 21 rotate along the first rotation axis M1 while the cutting wire tension remains in a stable state.

The tension wheel 21 and the tension swing arm assembly 24 can adopt the multi-degree-of-freedom rotation or single-degree-freedom rotation. For example, the tension rotation assembly 25 can be connected between the tension wheel 21 and the tension swing arm assembly 24 by using a universal rotation mechanism, so as to realize the multi-degree-freedom rotation. When the single-degree-freedom rotation is employed, the tension rotation assembly 25 is pivotally connected to the tension swing arm assembly 24, so that the tension wheel 21 can rotate along the pivoted axis, such as the second rotation axis M2. Specifically, the rotation direction of the tension rotation assembly 25 can be perpendicular or approximately perpendicular to the movement direction of the cutting wire.

Preferably, the rotation axis of the tension rotation assembly 25 relative to the tension swing arm assembly 24 is located in the plane where the wire groove of the tension wheel 21 is located, or the rotation axis of the tension rotation assembly 25 relative to the tension swing arm assembly 24 is parallel to the plane where the wire groove is located. In one embodiment, when they are coplanar, the tension wheel 21 can be located directly below or directly above the rotation axis; and when they are parallel to each other, the tension wheel 21 can be located on one side of the rotation axis.

In actual operation, factors such as the production device, production processes, and operation procedure will cause dimensional errors in components, and errors within the preset range are allowable errors. For example, an angle between the rotation axis of the tension rotation assembly 25 relative to the tension swing arm assembly 24 and the plane where the wire groove is located is smaller than or equal to 0.8°, which is an allowable error, and it should consider that the rotation axis of the tension rotation assembly 25 relative to the tension swing arm assembly 24 is parallel to the plane where the wire groove is located.

When the rotation axis of the tension rotation assembly 25 relative to the tension swing arm assembly 24 is parallel to the plane where the wire groove is located, the rotation structure, which is arranged between the tension rotation assembly 25 and the tension swing arm assembly 24, does not need to reserve space for the passage of the cutting wire. Therefore, the rotation structure between the tension rotation assembly 25 and the tension swing arm assembly 24 is more compact. For example, a bearing of smaller diameter can be selected to reduce the resistance of rotation of the tension rotation assembly 25 relative to the tension swing arm assembly 24, thereby further improving the sensitivity of the tension wheel 21 when the tension wheel 21 is stressed due to the deflection of the cutting wire to drive the tension rotation assembly 25 to rotate together with the tension swing arm assembly 24. That is, the recognition accuracy of the tension mechanism for the deflection of the cutting wire relative to the tension wheel 21 is improved, which is more beneficial to reduce friction between the tension wheel 21 and the cutting wire due to the deflection. Further, since there is a distance between the rotation axis of the tension wheel 21 and the tension rotation assembly 25, which rotate together relative to the tension swing rod assembly 24, and the cutting wire located in the wire groove, the projection distance of the rotation angle, caused by the deflection of the cutting wire pulling the tension wheel 21, onto the cutting main roller 11 is smaller than the distance between the rotation axis and the cutting wire. That is, the deflection distance of the cutting wire relative to the wire groove of the cutting main roller is smaller. Thus, this reduces the impact on the winding of the cutting main roller and the cutting quality, which is caused by the deflection of the cutting wire. The solution provided by the embodiment makes the structure of the tension mechanism simpler, more compact, lower in cost, and more reliable.

When the tension rotation assembly 25 is pivotally connected to the tension swing arm assembly 24, the tension wheel 21 rotates along the pivot axis, and the pivot axis is parallel or coplanar with the plane where the wire groove of the tension wheel 21 is located.

In one specific solution, the tension swing arm assembly 24 includes: a tension swing arm, one end of which is connected to the tension motor 22 and the other end of which is pivotally connected to the tension rotation assembly 25.

The tension swing arm can be a single swing arm, a double or multiple swing rods, or a plate structure.

If a single swing arm is adopted, the bottom end of the tension swing arm is pivotally connected to the tension rotation assembly 25.

If double or multiple swing rods are adopted, at least two tension swing arms are provided, the at least two tension swing arms have a preset angle therebetween, ends of the tension swing arms are connected together and connected to the tension motor 22, and the other ends of the tension swing arms are pivotally connected to the tension rotation assembly 25.

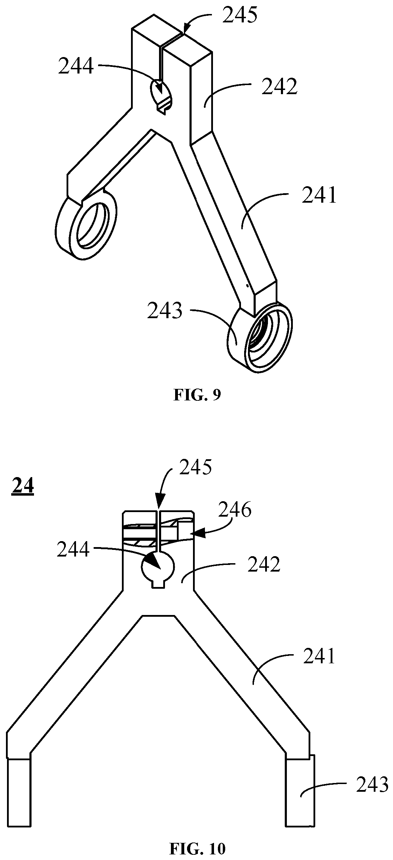

As shown in FIG. 9, in one embodiment, the tension swing arm assembly 24 includes at least two tension swing arms 241, wherein one end of each of the two tension swing arms 241 is fixedly connected to the driving assembly, and another end of each of the two tension swing arms 241 is arranged at an angle and pivotally connected to the tension rotation assembly 25.

The embodiment provides a specific implementation of the tension swing arm assembly 24. As shown in FIG. 10, the tension swing arm assembly includes two tension swing arms 241, wherein the preset angle between the two tension swing arms 241 is smaller than 180°. One end of the two tension swing arms 241 is connected together as a driving connection part 242, which is rotatably connected to the output shaft of the tension motor 22. A limiting structure is arranged between the two tension swing arms 241 for limiting the rotation amplitude of the tension swing arms 241.

For example, a limiting protrusion is arranged on an end face of the tension motor 22 as a limiting structure, and the limiting protrusion extends along the axial direction of the tension motor 22 to between the two tension swing arms 241. Since the tension swing arm 241 is limited by the limiting protrusion in the rotation process, the rotation amplitude is limited.

Alternatively, the limiting structure is a limiting plate, and the limiting plate is arranged at one end of the two tension swing arms 241 connected to the driving assembly.

The other end of the tension swing arm 241 is provided with a connection hole, and the tension rotation assembly 25 is rotatably arranged in the connection hole. Specifically, a rotation connection part 243 is arranged on the other end of the tension swing arm 241, the rotation connection part 243 is provided with a connection hole, and the tension rotation assembly 25 is rotatably arranged in the connection hole. The tension rotation assembly 25 rotates about the central axis of the connecting hole.

Further, the end of the tension swing arm 241 connected to the tension rotation assembly 25 is provided with a rotation connection structure, wherein the tension rotation assembly 25 is rotatably connected to the tension swing arm 241 via the rotation connection structure. The rotation connection structure can specifically be a connection hole arranged at the end of the tension swing arm 241, and the tension rotation assembly 25 is rotatably arranged within the connection hole; or a connection hole is arranged at the end of the tension rotation assembly 25, and the end of the tension swing arm 241 is inserted into the connection hole to realize the rotational connection.

In one embodiment, the ends of two tension swing arms 241 are provided with rotation connection parts 243, and through holes of the two rotation connection parts 243 are coaxially arranged. The tension rotation assembly 25 is rotatably arranged in the through holes of the two rotation connection parts 243 to realize the rotation connection with the tension swing arm assembly 24.

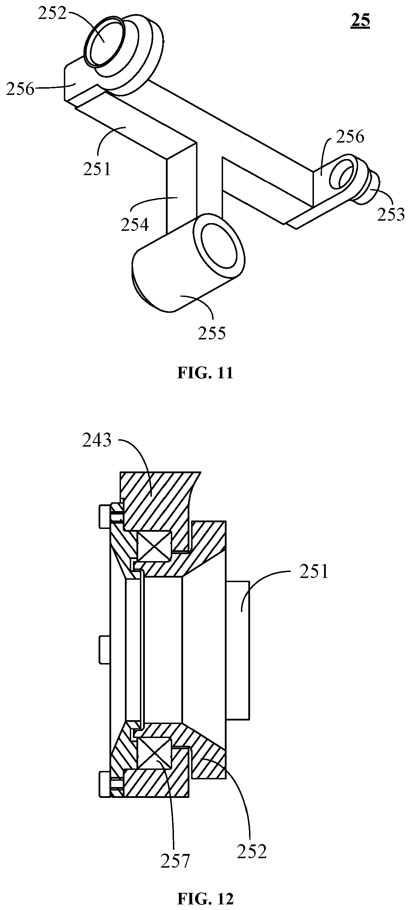

For the tension rotation assembly 25, the embodiment also provides a specific implementation. As shown in FIG. 11, the tension rotation assembly 25 includes a first rotation arm 251 and a second rotation arm 254, wherein each end of the first rotation arm 251 is pivotally connected to one end of each of the two tension swing arms 241 respectively.

The two ends of the first rotation arm 251 are correspondingly rotatably arranged in the connection holes of the ends of the above tension swing arms 241, and the second rotation arm 254 is connected between the first rotation arm 251 and the tension wheel 21. The tension wheel 21, along its own axis direction, is able to rotate relative to the second rotation arm 254, and thus, the cutting wire, wound around the tension wheel, can move.

Through the above solution, the tension wheel 21 can rotate along its own axis direction relative to the second rotation arm 254. The tension wheel 21 and the tension rotation assembly 25 rotate together relative to the tension swing arm 241 along the second rotation axis.

In one embodiment, as shown in FIG. 11 and FIG. 12, a first rotary shaft 252 and a second rotary shaft 253 are respectively arranged on two ends of the first rotation arm 251, and the first rotary shaft 252 and the second rotary shaft 253 are rotatably arranged in the connection holes of the tension swing arms 241 correspondingly.

In one embodiment, the first bearing 257 is arranged between the first rotary shaft 252 and the second rotary shaft 253 and the corresponding connection holes. Taking the rolling bearing with the inner and outer rings as an example, the outer ring of the first bearing cooperates with the rotation connection part 243 in the tension swing arm assembly, and the inner ring of the first bearing correspondingly cooperates with the first rotary shaft 252 and the second rotary shaft 253. The relative rotation among the first rotary shaft 252, the second rotary shaft 253, and the rotation connection part 243 is realized by the first bearing. The first rotary shaft 252 and the second rotary shaft 253 are directly arranged at the ends of the first rotation arm 251, and the centerlines of the first rotary shaft 252 and the second rotary shaft 253 and the centerline of the first rotation arm 251 can be parallel or colinear.

In another embodiment, as shown in FIG. 11, the first rotation arm 251 is of an elongate-rod-shaped structure with a rectangular cross section. The adapter plate 256 is arranged on each end of the first rotation arm 251, and the adapter plates 256 extend in a direction perpendicular to the first rotation arm 251. One end of the adapter plate 256 is fixedly connected to the end face of the first rotation arm 251 by a threaded fastener, and the other end is provided with the first rotary shaft 252 or the second rotary shaft 253. In the solution, the centerlines of the first rotary shaft 252 and the second rotary shaft 253 are not colinear with the centerline of the first rotation arm 251.

Further, the first rotary shaft 252 and the second rotary shaft 253 are coaxially arranged and connected to the tension swing arm 241 by the bearing. The centerlines of the first rotary shaft 252 and the second rotary shaft 253 are in a plane where the tension swing arm 241 rotates along the first rotation axis, and the plane is perpendicular to the axis of the tension motor. This can prevent the tension swing arm from interfering with the tension motor or other components in the rotation process.

In one specific solution, the first rotary shaft 252 is located on a side surface of the adapter plate 256 away from the first rotation arm 251, and the second rotary shaft 253 is located on a side surface of the adapter plate 256 away from the first rotation arm 251. The rotation connection parts 243 of the two tension swing arms 241 are correspondingly placed on and connected with the outer side of the first rotary shaft 252 and the second rotary shaft 253.

As shown in the view angle of FIG. 2, the cutting main roller 11 is located on the left side of the tension mechanism. The cutting wire is led from the cutting main roller 11, then wound into the wire groove of the tension wheel 21 from the top of the tension wheel 21 rightward, and then wound out leftward from the bottom of the tension wheel 21 into the wire winding/unwinding roller 31. Correspondingly, the first rotary shaft 252 is provided with a wire passing hole for the cutting wire to pass through. The cutting wire, led out by the cutting main roller 11, passes through the wire passing hole and then winds around the tension wheel 21, or the cutting wire led out by the tension wheel 21 passes through the wire passing hole and then winds around the cutting main roller 11. The cutting wire is protected and guided by the first rotary shaft 252.

Further, for the connection between the tension wheel 21 and the tension rotation assembly 25, a tension wheel connection part, specifically a sleeve 255, can be arranged on the end of the second rotation arm 254. The middle part of the tension wheel is connected to one end of the rotary shaft, and the other end of the rotary shaft is inserted into the sleeve 255 and rotatably connected to the sleeve 255. Specifically, a rolling bearing can be arranged between the rotary shaft and the sleeve 255 to realize the relative rotation.

For the connection between the tension swing arm 241 and the tension motor 22, the driving connection part 242 can be provided with a driving connection hole 244 arranged along the first rotation axis direction, and a keyway is arranged in the side wall of the driving connection hole 244. The output shaft of the tension motor is inserted into the driving connection hole 244, and a key is used to limit the position and to drive the rotation of the tension swing arm 241.

Further, a first adjustment slit 245 is arranged on one end of the driving connection part 242 away from the tension swing arm 241, the first adjustment slit 245 extends inwardly to be in communication with the driving connection hole 244, and the first adjustment slit 245 separates the end of the driving connection part 242 into two parts.

Additionally, the driving connection part 242 is provided with an adjustment structure for adjusting the width of the first adjustment slit. By providing the adjustment structure, the diameter of the driving connection hole 244 is enlarged when the first adjustment slit is enlarged, so that the output shaft of the tension motor can be detached from the driving connection hole 244 or enter the driving connection hole. By providing the adjustment structure, the diameter of the driving connection hole 244 is reduced when the first adjustment slit is reduced, so that the output shaft of the tension motor passing into the driving connection hole 244 is clamped.

In one embodiment, a first fastening hole 246 for the threaded fastener to pass through is arranged on the side surface of the driving connection part 242, and the first fastening hole 246 passes through the two parts in the above driving connection part separated by the first adjustment slit. When rotating, the threaded fastener can move in the two parts of the first fastening hole 246.

For example, as shown in FIG. 10, the threaded fastener is screwed into the first fastening hole 246 from the right to the left. When the threaded fastener is rotated counterclockwise to leave the left part of the first fastening hole 246, the width of the first adjustment slit 245 is larger, and the two parts have a smaller clamping force on the motor output shaft, at which time the motor output shaft can be detached from the driving connection hole 244. When the threaded fastener is rotated clockwise to be screwed into the left part of the first fastening holes 246, a clamping force is exerted on the two parts, so that the width of the first adjustment slit 245 is smaller and the motor output shaft can be clamped. In the above solution, by the threaded cooperation between the threaded fastener and the first fastening hole 246, the distance between the two parts in the driving connection part separated by the first adjustment slit is adjusted, so as to clamp the motor output shaft or loose the motor output shaft.

Based on the above technical solution, the tension swing arm 241, the first rotation arm 251, and/or the second rotation arm 254 can be thereon provided with a weight reduction hole or a weight reduction groove, and the weight reduction hole or the weight reduction groove can be a hole or groove with a circular, elliptical, or oblong shape, which is beneficial to reduce the weight of the tension mechanism.

Based on the above technical solution, a rotation damper is arranged on one end or two ends of the first rotation arm 251 and the corresponding connection hole for damping the high-frequency rotation of the first rotation arm 251, so as to prevent the instantaneous rapid rotation of the first rotation arm 251. The embodiment provides a method in which a rotation damper 26 is arranged on the end of the second rotary shaft 253.

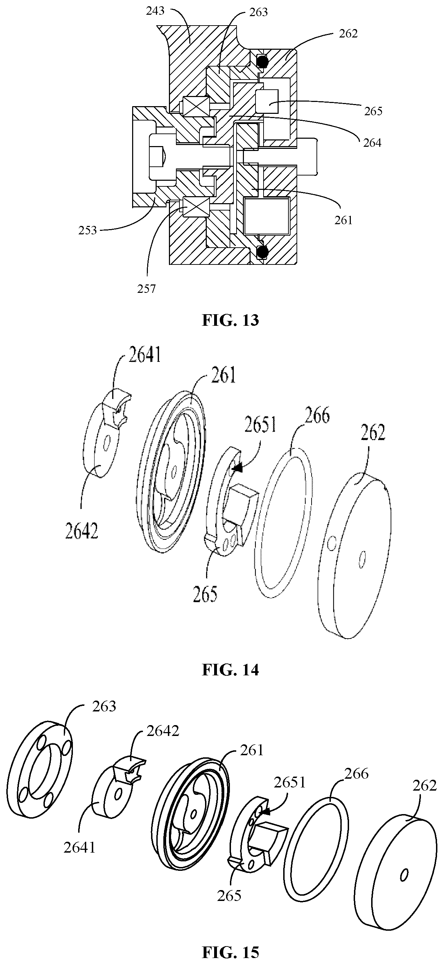

As shown in FIG. 13 to FIG. 17, in one specific solution, the rotation damper 26 includes an oil baffle plate 261, a damping end cover 262, a damping guide rail 264, and a damping piston 265. The damping guide rail 264 is connected to one side of the first rotation arm, which specifically is arranged at the end of the second rotary shaft 253. The oil baffle plate 261 is located at the outer side of the damping guide rail 264 away from the damping guide rail, a through hole is arranged at the upper part of the oil baffle plate 261, and the damping guide rail 264 partially passes through the through hole at the upper part of the oil baffle plate 261. The damping piston 265 is located on the outer side of the oil baffle plate 261 away from the damping guide rail 264, and is fixedly connected to the part of the damping guide rail 264 passing through the through hole. The damping piston 265 is provided with a damping hole 2651 for the damping liquid to pass through. The damping end cover 262 is arranged on the outer side of the damping piston 265 away from the oil baffle plate 261, and is fixedly connected to the oil baffle plate 261. An accommodation space for accommodating the damping liquid is formed by the lower part of the damping end cover 262 and the oil baffle plate 261.

As shown in FIG 13 and FIG. 15, in order from left to right, the second rotary shaft 253, the damping guide rail 264, the oil baffle plate 261, the damping piston 265, and the damping end cover 262 are provided. The second rotary shaft 253 is provided with a center hole, and the damping guide rail 264 is provided with a center threaded hole. The threaded fastener passes through the center hole of the second rotary shaft 253 from the left side and then is screwed into the center threaded hole of the damping guide rail 264. Thus, the second rotary shaft 253 and the damping guide rail 264 are tightly connected.

The rotation connection part 243 is sleeved on the second rotary shaft 253, a bearing is arranged between the rotation connection part 243 and the second rotary shaft 253, and a damping compression ring 263 is arranged on the outer side of the rotation connection part 243. The damping compression ring 263 is provided with a connection hole, and the rotation connection part 243 is provided with a threaded hole. The threaded fastener passes through the connection hole of the damping compression ring 263 from the right side and then is screwed into the threaded hole of the rotation connection part 243, and thus, the rotation connection part 243 is tightly connected to the damping compression ring 263.

The damping guide rail 264 includes a guide rail connecting disk 2641 and a guide protrusion 2642. A threaded hole for the threaded fastener to pass through is arranged at the middle part of one side of the guide rail connecting disk, which is fixed to the second rotary shaft 253 by the threaded fastener. The guide protrusion 2642 is arranged to protrude out of the other side of the guide rail connecting disk 2641. The guide protrusion 2642 passes through a through hole in the oil baffle plate 261 and is connected to the damping piston 265.

The guide protrusion 2642 is provided with an arcuate guide groove for accommodating the damping piston 265. The guide protrusion 2642 is configured to block the damping compression ring 263 from the right side so as to prevent the damping compression ring 263 and the rotation connection part 243 from moving rightward and disengaging from the second rotary shaft.

The damping piston 265 is in a C-shaped structure, an end of which is fixed to the arcuate guide groove of the damping piston 265 by the threaded fastener. The damping piston 265 is provided with a plurality of damping holes 2651.

The damping end cover 262 is provided with a center hole, and the oil baffle plate 261 is provided with a threaded hole at the center. The threaded fastener passes through the center hole of the damping end cover 262 from the right side and is screwed into the threaded hole of the oil baffle plate 261. Thus, the damping end cover 262 and the oil baffle plate 261 are fixedly connected. The oil baffle plate 261 is fixed to the rotation connection part 243 by a pin.

An accommodation space for accommodating the damping liquid is formed by the lower part of the damping end cover 262 and the oil baffle plate 261, and the damping liquid can flow within the accommodation space. The damping piston is located in the accommodation space, and the damping liquid can pass through the damping hole on the damping piston 265.

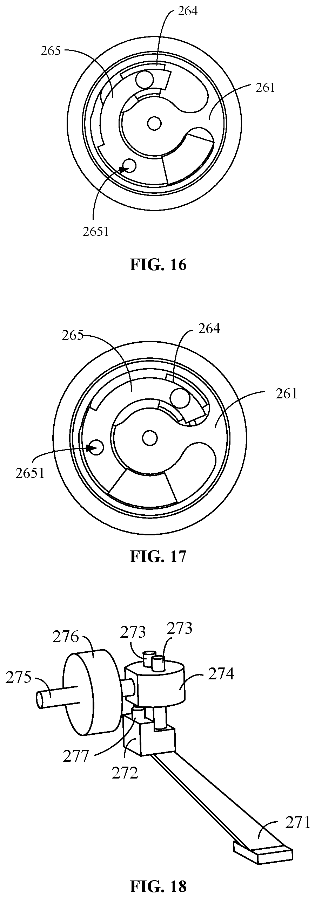

The damping guide rail 264, the damping piston 265, the second rotary shaft 253, and the tension wheel 21 rotate together. The flow of the damping liquid has a hysteresis. When the rotation speed is slow, the damping liquid can normally flow through the damping hole in the accommodation space, and the components can rotate normally. When the rotation speed suddenly becomes fast, the damping liquid generates hysteresis, which hinders the rapid rotation of the components. By avoiding the faster rotation of the tension wheel, the phenomenon of wire dislodgement or breakage due to the misplacement of the cutting wire can be avoided. FIG. 16 and 17 show the relative position of the damping guide rail 264, the damping piston 265, and the oil baffle plate 261 during rotation.

Further, an O-ring 266 is arranged between the damping end cover 262 and the oil baffle plate 261 to seal the gap between the damping end cover 262 and the oil baffle plate 261.

Based on the above technical solution, in order to ensure the stability of the tension wheel when rotating along the second rotation axis, a counterweight assembly 27, which is connected to the tension rotation assembly 25, can also be used. The counterweight assembly 27 and the tension wheel 21 rotate together along the second rotation axis and stabilize the tension wheel 21 during rotation.

The counterweight assembly can be balanced with the tension wheel by providing a counterweight block with a certain weight, so as to keep the center of gravity of the counterweight assembly and the tension wheel on the second rotation axis during rotation. The counterweight assembly can be realized by various methods, and the embodiment provides one specific solution as follows. As shown in FIG. 18, the counterweight assembly 27 includes a counterweight bracket 271 and a counterweight mechanism. One end of the counterweight bracket is connected to the tension rotation assembly 25, and the counterweight mechanism is arranged on the other end of the counterweight bracket 271. The position of the counterweight mechanism on the counterweight bracket 271 is adjustable. The moment of force can be changed by adjusting the position of the counterweight mechanism on the counterweight bracket 271, so the center of gravity of the counterweight assembly and the tension wheel are maintained on the second rotation axis.

In one embodiment, the counterweight mechanism 27 includes an adjustment block 272, a first counterweight rod 273, and a first counterweight block 274. The bottom of the counterweight bracket 271 is fixed to the first rotation arm 251, e.g., fixed to the first rotation arm 251 by bolts. The top of the counterweight bracket 271 is inclined towards the direction that the tension wheel 21 is deflected along the second rotation axis, which is equivalent to the angle between the counterweight bracket 271 and the tension wheel being smaller than 180° and the two rotating together around the second rotation axis.

The adjustment block 272 is arranged on the top of the counterweight bracket 271. The first counterweight rod 273 is arranged on the top surface of the adjustment block 272. The first counterweight block 274 is arranged on the first counterweight rod 273 and is able to move along the first counterweight rod 273. Changing the distance between the first counterweight block 274 and the second rotation axis is equivalent to adjusting the force arm between the first counterweight block 274 and the second rotation axis.

Further, the counterweight mechanism includes a second counterweight rod 275 and a second counterweight block 276. The second counterweight rod 275 can be arranged on the adjustment block 272 or the first counterweight block 273. The second counterweight block 276 is arranged on the second counterweight rod 275 and can be moved along the second counterweight rod 275. Changing the distance between the second counterweight block 276 and the second rotation axis is equivalent to adjusting the force arm between the first counterweight block 276 and the second rotation axis.

During the assembly process of the tension mechanism, the overall center of gravity of the counterweight assembly and the tension wheel is adjusted to be on the second rotation axis by adjusting the positions of the first counterweight block 273 and the second counterweight block 276, so the tension wheel rotates along the second rotation axis along with the cutting wire. It can achieve follow-and-hold motion, i.e., it rotates following the cutting wire and can stop at any position.

In one specific solution, the first counterweight rod 273 is a sliding rod, and the first counterweight block 274 is sleeved on the first counterweight rod 273. The adjustment block 272 is provided with a threaded hole for the adjustment screw 277 to pass through. Rotating the adjustment screw 277 can change the extension length of the adjustment screw 277 relative to the adjustment block. The adjustment screw 277 extends out of the adjustment block and abuts against the first counterweight block 274 for pushing the first counterweight block 274 to move relative to the first counterweight rod 273.

In one specific solution, the second counterweight rod 275 is a threaded rod, and the second counterweight block 276 is provided with an internal threaded hole for threaded cooperation with the second counterweight rod 275. The second counterweight block 276 can move relative to the second counterweight rod 275 by rotating the second counterweight block 276.

Further, a detection device 6 is used to detect the process of the tension wheel 21 along the second rotation axis, so as to obtain the deflection state of the tension wheel 21. The detection device 6 can be a distance sensor for detecting the distance to the tension wheel 21 (which is substituted with the distance between the detection device and the second rotation arm 254 in the figure). As shown in FIG. 7, when the cutting wire is not deflected, the tension wheel 21 is at the middle position, and the distance between the detection device 6 and the second rotation arm 254 is a. As shown in FIG. 8, when the cutting wire is deflected, the tension wheel 21 rotates to the left, and the distance between the detection device 6 and the second rotation arm 254 is b, where b is larger than a. When a relatively large distance value is detected, the rightward movement speed of the wire winding/unwinding roller 31 is increased. By calculating the difference between b and a, the angle and direction of deflection can be determined, and then the corresponding methods can be adopted. For example, the tension wheel can be corrected back to the position shown in FIG. 7 by adjusting the wire arrangement parameters, so as to ensure smooth cutting of the cutting wire.

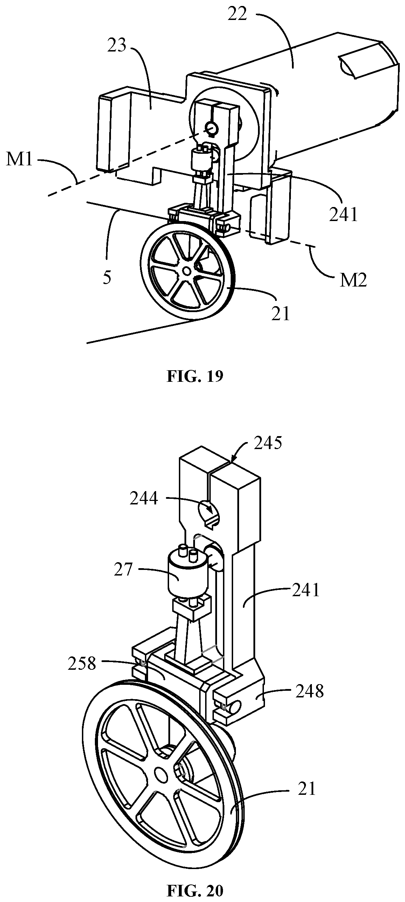

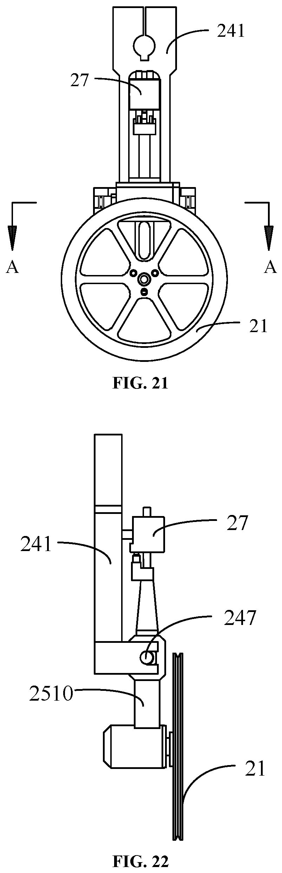

As shown in FIG. 19 to FIG. 22, another embodiment of the present disclosure provides a tension mechanism, including a tension swing arm assembly, a driving assembly, a tension rotation assembly, and a tension wheel 21. The driving assembly provides the tension swing arm assembly with the torque to drive the tension swing arm assembly to rotate, so as to adjust the tension of the cutting wire. The tension swing arm assembly includes a tension swing arm 241 and a mounting base, wherein the mounting base is arranged on one end of the tension swing arm 241, and the tension rotation assembly is rotatably connected to the mounting base.

The tension wheel 21 is rotatably connected to the tension rotation assembly, and the tension wheel 21 can rotate along its own axis to guide the cutting wire wound on the tension wheel. When stressed by the deflection of the cutting wire, the tension wheel 21 rotates together with the tension rotation assembly relative to the tension swing arm 241, so as to reduce the friction between the cutting wire and the tension wheel.

In the technical solutions provided by the embodiment, the tension wheel is rotatably connected to the tension rotation assembly so that the tension wheel guides the cutting wire. The tension rotation assembly is rotatably connected to the mounting base at the end of the tension swing arm. When the tension wheel is stressed due to the deflection of the cutting wire, the tension wheel and the tension rotation assembly rotate together relative to the tension swing arm to reduce the friction between the cutting wire and the tension wheel, thereby reducing the wear between the tension wheel and the cutting wire, reducing the risk of the cutting wire dislodgement or breakage, and improving the quality and efficiency of cutting.

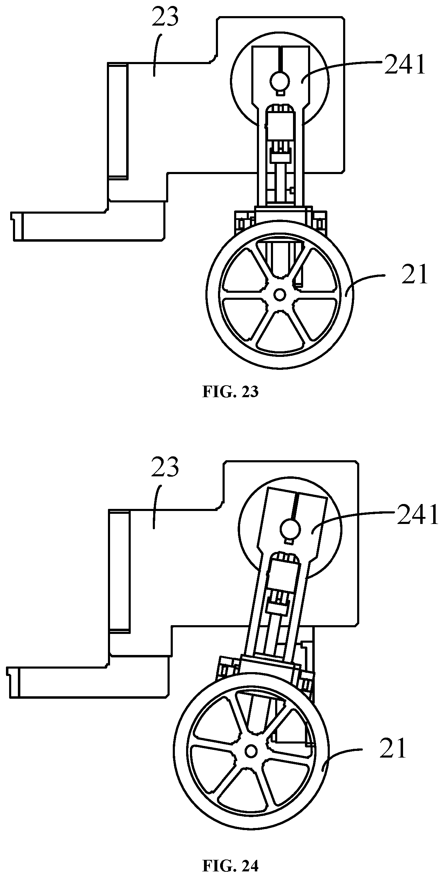

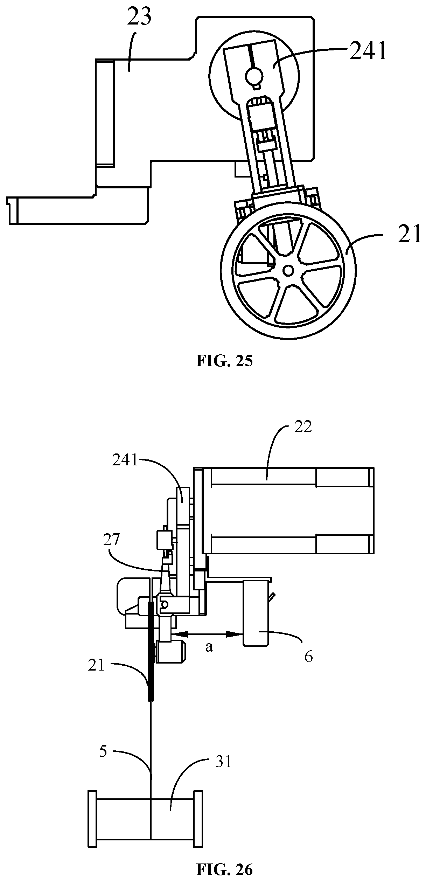

In one specific embodiment, the cutting wire released by the wire winding/unwinding roller 31 enters the tension wheel 21 from the bottom and is guided from the upper end of the tension wheel 21 to the cutting main roller 11. The driving assembly provides an initial constant torque for the swing arm, and the cutting wire is wound around the tension wheel. As shown in FIG. 23, the tension wheel 21 is located in the middle position. When the moment of force generated by the tension of the cutting wire is larger than the torque of the driving assembly, the cutting wire pulls the tension swing arm to rotate toward the direction of the cutting wire, so as to reduce the tension of the cutting wire, as shown in FIG. 24. When the moment of force generated by the tension of the cutting wire is smaller than the torque of the driving assembly, the driving assembly drives the tension swing arm to rotate away from the cutting wire, so as to increase the tension of the cutting wire, as shown in FIG. 25. By this cycle, the tension of the cutting wire is kept in a stable range.

FIG. 26 shows an ideal state. The plane where the tension wheel 21 is located is basically perpendicular to the rotation axis of the wire winding/unwinding roller 31, or a smaller angle exists between the rotation axis of the tension wheel 21 and the rotation axis of the wire winding/unwinding roller 31. The cutting wire is wound in or out of the wire winding/unwinding roller 31 in a basically perpendicular state. There will be no significant friction between the cutting wire and the wire groove of the tension wheel so the risk of the wire breakage is lower.

When the cutting wire entering or leaving the wire groove of the tension wheel becomes offset, that is, when the cutting wire deviates from the center of the wire groove, the tension wheel is stressed due to the deflection of the cutting wire and the tension wheel 21 rotates relative to the tension swing arm 241. By reducing the degree of deflection of the cutting wire to the wire groove, and reducing the angle between the cutting wire and the wire groove of the tension wheel, the wear between the cutting wire and the tension wheel can be reduced, thereby avoiding the phenomenon of wire dislodgement or breakage.

Additionally, the solution provided by the embodiment makes the structure of the tension mechanism simpler, more compact, lower in cost, and more reliable.

In one embodiment, the tension wheel 21 is provided with the wire groove capable of winding the cutting wire, and the axis of which the tension wheel 21 and the tension rotation assembly rotate together relative to the tension swing arm 241 is not located in the plane where the wire groove is located. Therefore, the rotation structure between the tension rotation assembly and the tension swing arm does not need to reserve space for the passage of the cutting wire so the rotation structure between the tension rotation assembly and the tension swing arm is more compact. For example, a bearing with a smaller diameter can be selected to reduce the resistance of rotation of the tension rotation assembly relative to the tension swing arm, which further improves the sensitivity of which the tension wheel is subjected to force due to the deflection of the cutting wire and drives the rotation assembly to rotate together relative to the tension swing arm, i.e., the accuracy improvement of identifying the deflection of the cutting wire relative to the tension wheel. This is more beneficial to reduce the friction between the tension wheel and the cutting wire due to the deflection. Further, since there is a distance between the axis of which the tension wheel 21 and the tension rotation assembly rotate together relative to the tension swing arm 241, and the cutting wire in the wire groove, a projection distance of the rotation angle, caused by the deflection of the cutting wire pulling the tension wheel 21, onto the cutting main roller 11 is smaller than the distance between the rotation axis and the cutting wire. This means that the deflection distance of the cutting wire relative to the wire groove of the cutting main roller is smaller, thereby reducing the impact of cutting wire deflection on the winding around the cutting main roller and the cutting quality. Therefore, the solution provided by the embodiment makes the structure of the tension mechanism simpler, more compact, lower in cost, and more reliable.

For example, the axis of which the tension wheel 21 and the tension rotation assembly 25 rotate together relative to the tension swing arm 241 is parallel to the plane where the wire groove is located.

Specifically, at least two mounting bases 248 are provided, where the mounting bases 248 are oppositely arranged on the same end of the tension swing arm 241, and the tension rotation assembly is located between two mounting bases 248. For example, two mounting bases 248 are provided, and the tension rotation assembly is located between the two mounting bases 248. The mounting base 248 is fixedly provided with a rotary shaft, and the tension rotation assembly is rotatably connected to the rotary shaft. Alternatively, the tension rotation assembly is fixedly provided with a rotary shaft, and the rotary shaft is rotatably connected to the mounting base 243. In the embodiment, the mounting base 243 is fixedly provided with the rotary shaft as an example.

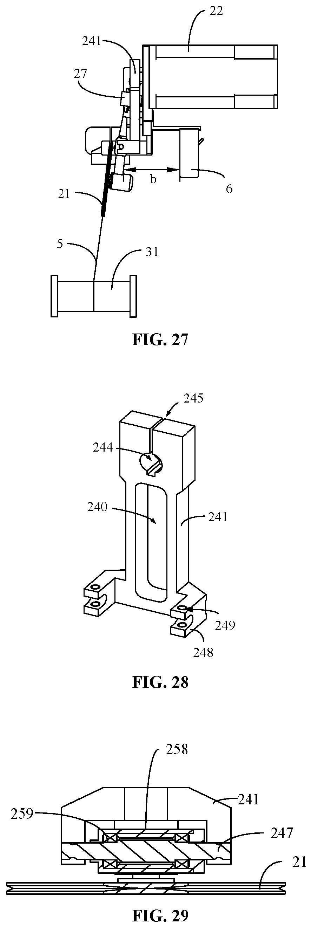

In one embodiment, as shown in FIG. 28 to FIG. 30, the tension rotation assembly includes a shaft box body 258 and a tension wheel connection arm 2510. The rotary shaft 247 passes through the shaft box body 258 to rotatably connect to the shaft box body 258 by the second bearing 259. One end of the tension wheel connection arm 2510 is connected to the shaft box body 258 and the other end is connected to the tension wheel 21. In one embodiment, the rotation axis of the shaft box body 258 is not coplanar with the plane where the wire groove is located, and the rotation axis of the shaft box body 258 is located on one side of the plane where the wire groove is located close to the tension swing arm 241.

Specifically, the shaft box body 258 is of box structure with a cavity inside. The shaft holes for the rotary shaft 247 to pass through are respectively arranged on two ends of the shaft box body 258 in the axis direction. The rotary shaft 247 is passed into the shaft box body 258 from the shaft hole at one end and passed out from the shaft hole at the other end. Two ends of the rotary shaft 247 are fixed to the tension swing arm 241. The axis of the rotary shaft 247 is the second rotation axis M2.

Further, the second bearing 259 is arranged at the internal space (i.e., the cavity) of the shaft box body 258, and is located between the shaft box body wall and the rotary shaft 247, so the relative rotation between the rotary shaft 247 and the shaft box body 258 is realized by the second bearing 259.

One end of the tension wheel connection arm 2510 is connected to the shaft box body 258, and the other end is connected to the wheel shaft of the tension wheel 21. Thus, the tension wheel 21 is connected to the shaft box body 258 and rotates together with the shaft box 258 along the second rotation axis M2.

Further, the mounting base 248 is provided with a mounting groove for accommodating the rotary shaft. Specifically, the mounting base 248 is provided with two mounting plates arranged in parallel and opposite to each other, and the mounting groove is formed by the gap between the two mounting plates.

Further, the mounting base 248 is provided with a rotary shaft fixing mechanism for fixing the rotary shaft in the mounting groove. In one embodiment, the mounting base 248 is provided with a second fastening hole 249 for insertion of the fastener. The fastener extends along the radial direction of the rotary shaft and abuts against a fixing groove arranged at the end of the rotary shaft, or the fastener is inserted into a fixing hole arranged at the end of the rotary shaft, so the rotary shaft 247 is fixed to the mounting base 248.

Specifically, a through hole is arranged on the end of the rotary shaft 247. The rotary shaft 247 is placed into the rotary shaft mounting groove and clamped between the two mounting plates, and the through hole in the rotary shaft 247 is aligned to the second fastening hole 249. The bolts or positioning pins are used to insert the second fastening hole 249 and the through hole in the rotary shaft 247 in sequence, so the rotary shaft 247 and the tension swing arm 241 are relatively fixed.

Alternatively, a fixing groove extending along the radial direction of the rotary shaft can also be arranged at the end of the rotary shaft 247, wherein the bolt or positioning pin is inserted into the second fastening hole 249 and abuts against the fixing groove in the rotary shaft 247. Thus, the rotary shaft 247 and the tension swing arm 24 are relatively fixed.

The mounting groove formed by the gap between the above two mounting plates is an opening groove, which facilitates the installation of the rotary shaft, thereby improving assembly efficiency.

The specific connection structure between the tension swing arm 241 and the tension motor 22 can be referred to in the previous description, and will not be repeated herein.

Further, a detection device 6 is used to detect the process of the tension wheel 21 along the second rotation axis, so as to obtain the deflection state of the tension wheel 21. The detection device 6 can be a distance sensor for detecting the distance to the tension wheel 21 (which is substituted with the distance between the detection device and the tension wheel connection arm 253 in the figure). As shown in FIG. 9, when the cutting wire is not deflected, the tension wheel 21 is at the middle position, and the distance between the detection device 6 and the tension wheel connection arm 253 is a. As shown in FIG. 27, when the cutting wire is deflected, the tension wheel 21 rotates to the left, and the distance between the detection device 6 and the tension wheel connection arm 253 is b, where b is larger than a. When a relatively large distance value is detected, the rightward movement speed of the wire winding/unwinding roller 31 is increased. By calculating the difference between b and a, the angle and direction of deflection can be determined, and then the corresponding methods can be adopted. For example, the tension wheel can be corrected back to the position shown in FIG. 26 by adjusting the wire arrangement parameters, so as to improve the smoothness of cutting of the cutting wire.

Based on the above technical solution, in order to ensure the stability of the tension wheel during rotation along the second rotation axis, a counterweight assembly 27 can also be used and is arranged on the rotation assembly. The counterweight assembly 27, the tension rotation assembly, and the tension wheel 21 rotate together along the second rotation axis and stabilize the tension wheel 21 during rotation.

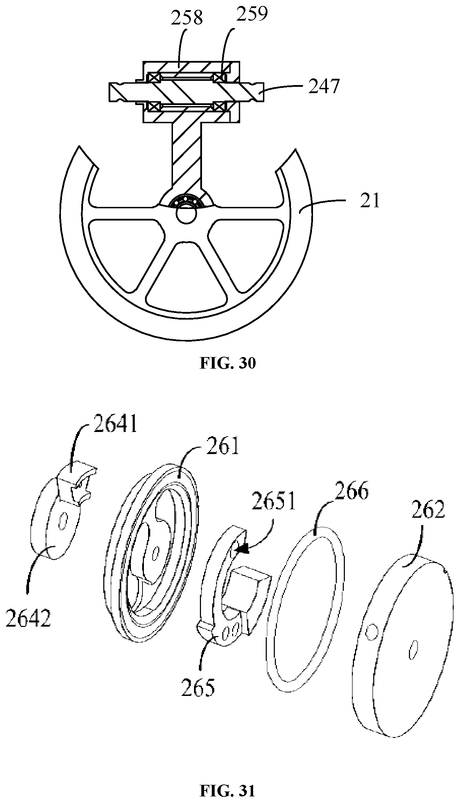

The counterweight assembly can be balanced with the tension wheel by providing a counterweight block with a certain weight, so as to keep the center of gravity of the counterweight assembly and the tension wheel on the second rotation axis during rotation. The counterweight assembly can be realized by various methods, and the embodiment provides one specific solution as follows. As shown in FIG. 31, the counterweight assembly 27 includes a counterweight bracket 271 and a counterweight mechanism. One end of the counterweight bracket 271 is fixed to the shaft box body 251, and the counterweight mechanism is arranged on the other end of the counterweight bracket 271. The counterweight mechanism can move relative to the counterweight bracket 271 so the common center of gravity of the tension wheel 21 and the counterweight assembly 27 is on the second rotation axis M2 during the rotation process of the tension wheel 21 along the second rotation axis M2.

The bottom of the counterweight bracket 271 is fixed to the shaft box body 258, for example, it is fixed to the shaft box body 258 by bolts, or formed integrally with the shaft box body 258.

The specific structure of the counterweight mechanism can be referred to in the previous description, and will not be repeated herein.

Based on the above solutions, further, an avoidance hole 246 for the passage of the counterweight assembly 27 is arranged at the middle part of the tension swing arm 241. When the tension wheel 21 and the counterweight assembly 27 rotate, the counterweight assembly 27 can enter into the avoidance hole 246, so the tension swing arm 241 does not hinder the rotation process of the counterweight assembly 27. Additionally, the avoidance hole 246 can play a role in weight reduction, so as to reduce the entire weight of the tension mechanism.

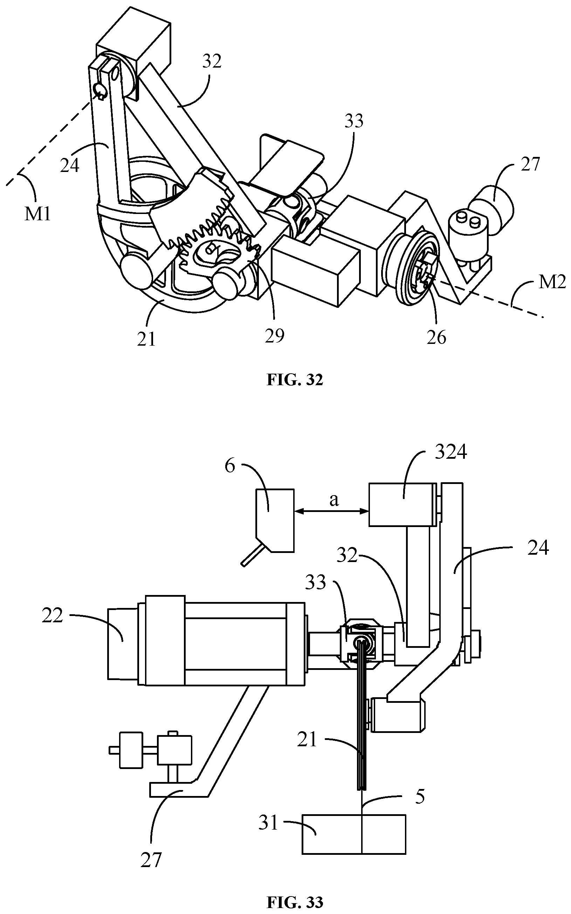

As shown in FIG. 32, another embodiment of the present disclosure provides a tension mechanism, including a tension swing arm assembly 24, a driving assembly, a tension base 32, and a tension wheel 21, wherein the driving assembly can provide the tension swing arm assembly 24 with the torque to drive the tension swing arm assembly 24 to rotate.

The tension wheel 21 can be thereon provided with the cutting wire and is rotatably connected to the tension swing arm assembly 24. The tension wheel 21 rotates along its own axis to guide the cutting wire.

The tension swing arm assembly 24 is connected to the driving assembly by the rotation mechanism 33 for adjusting the rotation of the tension swing arm assembly 24 relative to the tension base 32 to adjust the tension of the cutting wire. The driving assembly is further connected to the tension base 32 by the rotation mechanism 33. Therefore, the tension wheel 21 is rotated relative to the driving assembly together with the tension swing arm assembly 24 and the tension base 32 when the tension wheel 21 is stressed due to the deflection of the cutting wire. This reduces the friction between the tension wheel and the cutting wire.

In the technical solutions of the embodiment, the tension wheel is rotatably connected to the tension swing arm assembly to realize the guidance of the cutting wire, and the tension swing arm assembly and the tension base are connected to the driving assembly by the rotation mechanism. On the one hand, this solution realizes the tension adjustment. On the other hand, when the tension wheel is stressed due to the deflection of the cutting wire, the tension wheel together with the tension swing arm assembly and the tension base rotate relative to the driving assembly, thereby reducing friction between the cutting wire and the tension wheel due to the deflection of the cutting wire. Thus, the wear between the tension wheel and the cutting wire is reduced, which avoids the risk of the cutting wire dislodgement or breakage, thereby improving the quality and efficiency of cutting.

The tension wheel 21 further rotates relative to the tension swing arm assembly 24 to adjust the posture of the tension wheel.

FIG. 33 shows an ideal state. The plane where the tension wheel 21 is located is basically perpendicular to the rotation axis of the wire winding/unwinding roller 31, or a smaller angle exists between the rotation axis of the tension wheel 21 and the rotation axis of the wire winding/unwinding roller 31. The cutting wire is wound in or out of the wire winding/unwinding roller 31 in a basically perpendicular state. There will be no significant friction between the cutting wire and the wire groove of the tension wheel so the risk of wire breakage is lower.

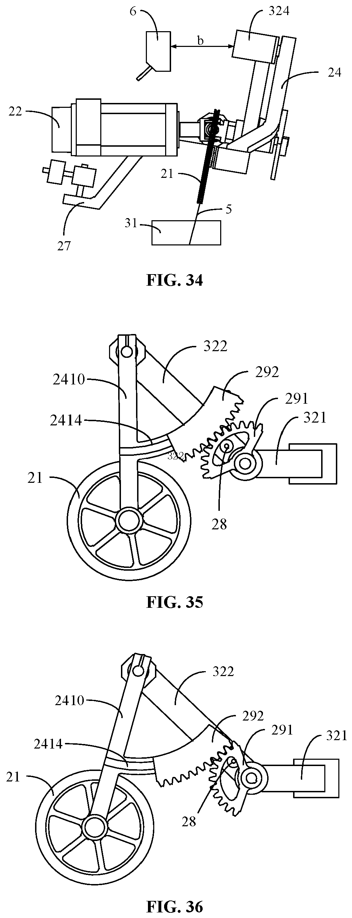

When the cutting wire entering or leaving the wire groove of the tension wheel becomes offset, that is, when the cutting wire deviates from the center of the wire groove, the tension wheel 21 is stressed due to the deflection of the cutting wire, and the tension wheel 21 rotates relative to the tension swing arm assembly 24. As shown in FIG. 34, the tension wheel 21 is in an inclined state along the routing direction of the cutting wire. By reducing the angle between the cutting wire and the wire groove of the tension wheel, the wear between the cutting wire and the tension wheel can be reduced, which avoids the phenomenon of wire dislodgement or breakage.

During the rotation process of the tension wheel 21, it can further play a role of adjusting the tension of the cutting wire, so the tension of the cutting wire meets the cutting requirements.

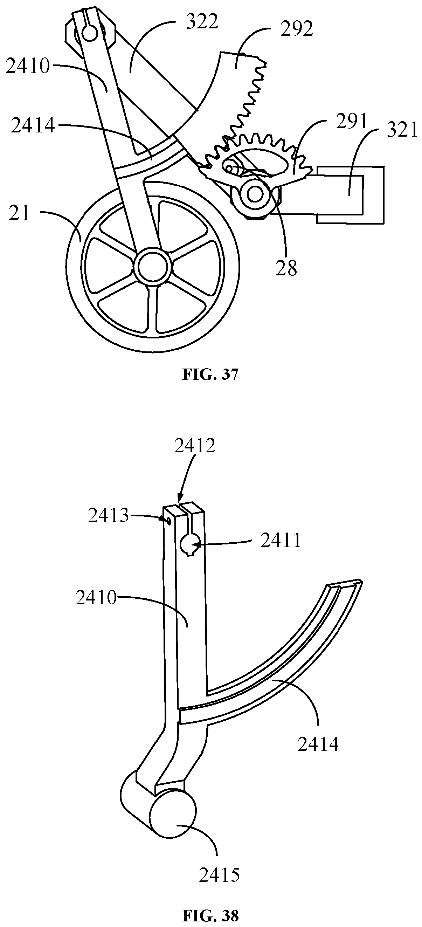

In one specific embodiment, the cutting wire released by the wire winding/unwinding roller 31 enters the tension wheel 21 from the bottom and is guided from the upper end of the tension wheel 21 to the cutting main roller 11. The driving assembly provides an initial constant torque for the swing arm, and the cutting wire is wound around the tension wheel. As shown in FIG. 35, the tension wheel 21 is located in the middle position. When the moment of force generated by the tension of the cutting wire is larger than the torque of the driving assembly, the cutting wire pulls the tension swing arm to rotate toward the direction of the cutting wire, so as to reduce the tension of the cutting wire, as shown in FIG. 36. When the moment of force generated by the tension of the cutting wire is smaller than the torque of the driving assembly, the driving assembly drives the tension swing arm to rotate away from the cutting wire, so as to increase the tension of the cutting wire, as shown in FIG. 37. By this cycle, the tension of the cutting wire is kept in a stable range.

Further, the tension transmission mechanism can be connected between the driving assembly and the tension swing arm assembly 24 to transfer the rotational action of the driving assembly to the tension swing arm assembly 24, so as to provide the initial rotational torque to the tension swing arm assembly 24. Thus, the tension swing arm assembly 24 rotates and is maintained in a stable tension state of the cutting wire.

The driving assembly can be a hydraulic drive, an air drive, or an electric drive. The embodiment uses the tension motor 22 as a driving assembly. The tension motor 22 can be mounted to the machine frame, and the tension motor 22 is connected to the tension transmission mechanism 29, so as to output the rotational force to the tension transmission mechanism 29. The tension transmission mechanism 29 transmits the rotational force to the tension swing arm assembly 24 to drive the tension swing arm assembly 24 to rotate along the first rotation axis M1 relative to the tension base 32, so the tension wheel 21 rotates together with the tension swing arm assembly 24.

In a specific solution, the tension wheel 21 is provided with a wire groove for winding the cutting wire. The tension wheel 21 together with the tension swing arm assembly 24 and the tension base 32, relative to the rotation axis of the driving assembly, are located on the plane where the wire groove is located.

In another specific solution, the axis of which the tension wheel 21, the tension swing arm assembly 24, and the tension base 32 rotate together relative to the driving assembly is parallel to the plane where the wire groove is located. In actual operation, factors such as the production device, production processes, and operation procedure will cause dimensional errors in components, and errors within the preset range are allowable errors. For example, an angle between the above rotation axis and the plane where the wire groove is located is smaller than or equal to 0.8°, which is an allowable error; and it should be considered that the rotation axis is parallel to the plane where the wire groove is located.

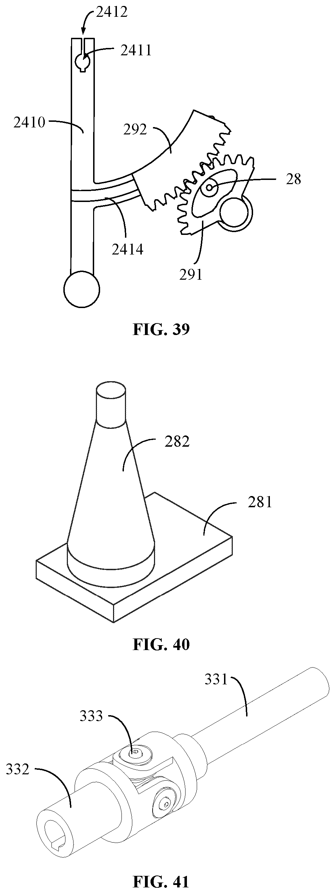

If the axis of which the tension wheel 21, the tension swing arm assembly 24, and the tension base 32 rotate together relative to the driving assembly is parallel to the plane where the wire groove is located, the rotation structure between the tension swing arm assembly 24 and the tension base 32 does not need to reserve space for the passage of the cutting wire , so the rotation structure between the tension swing arm assembly 24 and the tension base 32 is more compact. For example, a bearing with a smaller diameter can be selected to reduce the resistance of rotation of the tension base 32. This further improves sensitivity of which the tension wheel is subjected to force due to the deflection of the cutting wire and drives the tension swing arm assembly 24 and the tension base 32 to rotate together relative to the driving assembly, i.e., the accuracy improvement where the tension mechanism identifies the deflection of the cutting wire relative to the tension wheel. It is more beneficial to reduce the friction between the tension wheel 21 and the cutting wire due to the deflection. Further, since there exists a distance between the axis of which the tension wheel 21 rotates together with the tension swing arm assembly 24 and the tension base 32 relative to the driving assembly, and the cutting wire in the wire groove, the projection distance of the rotation angle, caused by the deflection of the cutting wire pulling the tension wheel 21, onto the cutting main roller 11 is smaller than the distance between the rotation axis and the cutting wire. That is, the deflection distance between the cutting wire and the wire groove of the cutting main roller is smaller, thereby reducing the impact of cutting wire deflection on the winding around the cutting main roller and the cutting quality. Therefore, the solution provided by the embodiment makes the structure of the tension mechanism simpler, more compact, lower in cost, and more reliable. Based on the above technical solution, the embodiment provides an implementation of the tension swing arm assembly 24. As shown in FIG. 38 and FIG. 39, the tension swing arm assembly 24 includes a first swing arm 2410 and a second swing arm 2414, wherein the first swing arm 2410 is rotatably connected to the tension base 32 and is able to rotate along the first rotation axis M1 relative to the tension base 32. Specifically, one end of the first swing arm 2410 is rotatably connected to the tension base 32, and the tension wheel 21 is connected to the other end of the first swing arm 2410.

The second swing arm 2414 is connected to the first swing arm 2410, and the tension transmission mechanism 29 is connected between the second swing arm 2414 and the tension motor 22. In one embodiment, one end of the second swing arm 2414 is connected to the middle part of the first swing arm 2410, and the second swing arm 2414 extends in a direction away from the first swing arm 2410 to connect to the tension transmission mechanism 29.

A tension wheel connection part 2415 is arranged on the end of the first swing arm 2410 to rotatably connect to the tension wheel 21. For example, the tension wheel 21 is fixedly connected to a wheel shaft, and the wheel shaft is rotatably arranged at the internal cavity of the tension wheel connection part 2415.

The tension transmission mechanism 29 can be realized in various methods, e.g., gear transmission, sprocket transmission, and belt transmission. In the embodiment, the tension transmission mechanism 29 includes a driving transmission member 291 and a driven transmission member 292, wherein the driving transmission member 291 is connected to the tension motor 22, and the driven transmission member 292 is arranged in the second swing arm 2414. The driving transmission member 291 cooperates with the driven transmission member 292 to transmit the rotational action of the tension motor 22 to the driven transmission member 292, and then it is transmitted to the first swing arm 2410 via the second swing arm 2414. Thus, the first swing arm 2410 drives the tension wheel 21 to rotate along the first rotation axis M1.

Specifically, the driving transmission member 291 is a driving gear, and the driven transmission member 292 is a driven gear, wherein the driving gear is engaged with the driven gear. As shown in FIG. 39, both the driving gear and the driven gear are sector gears, the rotary shaft of the driving gear is connected to the tension motor 22, the tension motor 22 drives the driving gear to rotate, and the driven gear is arranged on the arcuate second swing arm 2414.

Further, the driving gear is provided with a through hole penetrating its thickness. The tension base 32 is provided with a limiting member 28, and the limiting member 28 is inserted into the through hole to limit the rotational stroke of the driving gear. During the movement process shown in FIG. 35 to FIG. 36, the driving gear rotates counterclockwise to drive the tension swing arm assembly 24 to rotate clockwise and the rotation stops when the limiting member 28 touches the inner wall of the driving gear, thus limiting the stroke of the driving gear along the counterclockwise rotation. During the movement process shown in FIG. 35 to FIG. 37, the driving gear rotates clockwise to drive the tension swing arm assembly 24 to rotate counterclockwise and the rotation stops when the limiting member 28 touches the inner wall of the driving gear, thus limiting the stroke of the driving gear along the clockwise rotation.

In one embodiment, as shown in FIG. 40, the limiting member 28 includes a limiting base 281 and a limiting protrusion 282, wherein the limiting base 281 is mounted to tension base 32, and the limiting protrusion 282 is inserted into the through hole of the driving gear. The limiting protrusion 282 can be a cylindrical protrusion or a conical protrusion, and its cross section can be a regular polygon, such as circular or rectangular, or it can be an irregular shape.

The embodiment further provides an implementation of the rotation mechanism 33. As shown in FIG. 41, the rotation mechanism includes an input shaft 331 and an output shaft 332, wherein the input shaft 331 and the output shaft 332 are connected to each other by a universal adjustment assembly 333, so as to generate the multi-degree-freedom rotation between the input shaft 331 and the output shaft 332.

The input shaft 331 is connected to the tension motor 22, and the tension motor 22 drives the input shaft 331 to rotate in the axial direction of the tension motor 22. The output shaft 332 is arranged on the tension base 32. The output shaft 332 is connected to the driving transmission member 291, e.g., it is connected by a key. On the one hand, the input shaft 331 drives the output shaft 332 to rotate along the axial direction of the output shaft 332 itself by the universal adjustment assembly 333; and on the other hand, the output shaft 332 together with the tension base 32 generates the multi-degree-freedom rotation relative to the input shaft 331 by the universal adjustment assembly 333. The tension wheel 21, the tension swing arm assembly 24 together with the tension base 32 generate the multi-degree-freedom rotation, so as to adjust the posture of the tension wheel 21.

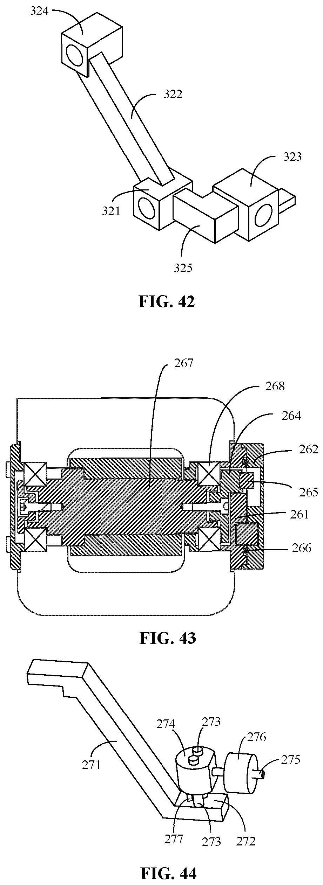

Based on the above technical solution, the present embodiment provides an implementation of the tension base 32 to cooperate with the mounting and movement of the above components. As shown in FIG. 42, the tension base 32 includes a first mounting base 321 and a mounting arm, and the mounting arm herein is referred to as the first mounting arm 322. The first mounting base 321 is configured to connect to the rotation mechanism. Specifically, the first mounting base 321 has a space inside to accommodate the output shaft 332 of the rotation mechanism. The output shaft 332 passes through the space of the first mounting base 321 in a rotating manner, wherein one end is exposed to connect to the universal adjustment assembly 333, and the other end is exposed to connect to the driving transmission member 291. A bearing is arranged between the output shaft 332 and the first mounting base 321.

One end of the first mounting arm 322 is fixed to the first mounting base 321. The other end is rotatably connected to the tension swing arm assembly 24, and specifically, it is rotatably connected to one end of the first swing arm. The sizes, positions, and spatial structures of the first mounting arm 322 and the tension swing arm assembly 24 can be referred to as FIG. 32.

For the connection between the tension swing arm assembly 24 and the first mounting arm 322, the embodiment provides a solution as follows. As shown in FIG. 38 and FIG. 39, a shaft hole 2411 is arranged on an end (i.e., the end connected to the mounting arm) of the tension swing arm assembly 24 away from the tension wheel 21. The rotary shaft passing into the shaft hole 2411 is rotatably connected to the first mounting arm 322. Specifically, the rotary shaft is fixed to the first mounting arm 322 and rotates relative to the tension swing arm assembly 24; or the rotary shaft is fixed to the tension swing arm assembly 24 and rotates relative to the first mounting arm 322.

In the embodiment, the rotary shaft is fixed to the tension swing arm assembly 24. Specifically, a keyway is arranged in the shaft hole 2411 and the shaft hole 2411 is connected to the rotary shaft by a key, so the rotary shaft is fixed to the tension swing arm assembly 24 and rotates relative to the first mounting arm 322.

Further, a second adjustment slit 2412 is arranged on the end (i.e., the end of the first swing arm connected to the mounting arm) of the tension swing arm assembly 24 away from the tension wheel 21, wherein the second adjustment slit 2412 extends to communicate with the shaft hole 2411, and the second adjustment slit 2412 separates the end of the tension swing arm assembly 24 into two parts. Additionally, an adjustment structure for changing the width of the adjustment slit is arranged on the end (i.e., the end of the first swing arm connected to the mounting arm) of the tension swing arm assembly 24 away from the tension wheel 21. By providing the adjustment structure to enlarge the second adjustment slit, the diameter of the shaft hole 2411 is enlarged, and the rotary shaft can be detached from the shaft hole 2411 or enter the driving connection hole. By providing the adjustment structure to reduce the second adjustment slit, the diameter of the shaft hole 2411 is reduced, so the rotary shaft entering the shaft hole 2411 is clamped and fixed.

In one embodiment, a fastening hole 2413 for the threaded fastener to pass through is arranged on the side surface of the tension swing arm assembly 24, and the fastening hole 2413 penetrates through the two parts of the tension swing arm assembly 24 that are separated by the adjustment slit. A threaded fastener is inserted into the fastening hole 2413 and rotated, so the threaded fastener moves in the two parts of the fastening hole 2413, which in turn changes the width of the adjustment slit 2412.

In a specific embodiment, a third mounting base 324 is connected to the end of the first mounting arm 322. The third mounting base 324 has a cavity inside, and the rotary shaft is inserted into the cavity to rotate relative to the third mounting base 324. Further, a bearing can also be arranged between the rotary shaft and the third mounting base 324 for smooth rotation.

Based on the above technical solution, the tension swing arm assembly 24 can be provided with a weight reduction hole or a weight reduction groove, wherein the weight reduction hole or the weight reduction groove can be a hole or groove with a circular, elliptical, or oblong shape, which is beneficial to reduce the weight of the tension mechanism.

Further, the tension base 32 includes a second mounting base 323 connected to the first mounting base 321. The second mounting base 323 is provided with a rotation damper 26 for damping the high-frequency rotation of the tension base 32, so as to prevent the instantaneous rapid rotation of the tension base 32.

As shown in FIG. 43, the rotation damper 26 includes an oil baffle plate 261, a damping end cover 262, a damping guide rail 264, a damping piston 265, and a damping shaft 267, wherein the damping shaft 267 is arranged in the second mounting base 323 and is able to rotate relative to the second mounting base 323. The centerline of the damping shaft 267 is co-linear with the rotation centerline of the universal adjustment assembly 333, which is the second rotation axis M2.

The damping guide rail 264 is connected to the end of the damping shaft 267, for example, they can be fixed by bolts. The oil baffle plate 261 is located at the outer side of the damping guide rail 264 away from the damping shaft 267.

The specific structures and assembly relationships of the oil baffle plate 261, the damping end cover 262, the damping guide rail 264, and the damping piston 265 can be referred to in the previous description, and will not be repeated herein.

The guide protrusion 2642 is configured to block the damping bearing 268 from the right side, which prevents the damping bearing 268 from moving to the right and detaching from the damping shaft 267. The damping bearing 268 is arranged between the damping shaft 267 and the second mounting base, which realizes the relative rotation between the damping shaft 267 and the second mounting base.

In the above embodiment, the second mounting base 323 can be connected to the first mounting base 321 by the second mounting arm 325. The second mounting arm 325 is in an "L" shape so the centerline of the damping shaft 267 is aligned to the centerline of the universal adjustment assembly.

Further, a detection device 6 is used to detect the process of the tension wheel 21 along the second rotation axis, so as to obtain the deflection state of the tension wheel 21. The detection device 6 can be a distance sensor for detecting the distance to the tension wheel 21 (which is substituted with the distance between the detection device 6 and the third mounting base 324 in the figure). As shown in FIG. 33, when the cutting wire is not deflected, the tension wheel 21 is at the middle position, and the distance between the detection device 6 and the third mounting base 324 is a. As in FIG. 34, when the cutting wire is deflected, the tension wheel 21 rotates to the left, and the distance between the detection device 6 and the third mounting base 324 is b, where b is larger than a. When a relatively large distance value is detected, the rightward movement speed of the wire winding/unwinding roller 31 is increased. By calculating the difference between b and a, the angle and direction of deflection can be determined, and then the corresponding methods can be adopted. For example, the tension wheel can be corrected back to the position shown in FIG. 33 by adjusting the wire arrangement parameters, so as to improve the smoothness of cutting of the cutting wire.

Based on the above technical solution, in order to ensure the stability of the tension wheel during rotation along the second rotation axis, a counterweight assembly 27 can also be used, which is connected to the tension base 32 and rotates in synchronization therewith. The counterweight assembly 27 and the tension wheel 21 rotate together along the second rotation axis and stabilize the tension wheel 21 during rotation, as shown in FIG. 32.

The specific structure of the counterweight assembly can be referred to the previous description, and will not be repeated herein.

Based on the above contents, the present embodiment further provides a wire saw unit, including a cutting mechanism, a wire winding/unwinding mechanism, and the tension mechanism provided any content of the above. The wire winding/unwinding mechanism includes a wire winding/unwinding roller 31 for storing or releasing the cutting wire. Thus, the cutting wire moves reciprocally between the wire winding/unwinding roller 31, the tension wheel 21, and the cutting main rollers 11 of the cutting mechanism.

In one embodiment, the tension wheel 21 and the wire winding/unwinding roller 31 are arranged in one-to-one correspondence. The wire winding/unwinding roller 31 can move reciprocally along its axial direction to realize the wire arrangement, so as to guide the cutting wire wound out of the tension wheel 21 to the wire winding/unwinding roller 31, or to guide the cutting wire released by the wire winding/unwinding roller 31 to the tension wheel 21.

During the process in which the tension wheel 21 and the tension rotation assembly rotate together relative to the tension swing arm assembly, the angle between the plane where the tension wheel 21 is located and the cross section of the wire winding/unwinding roller 31 changes, so the tension wheel is adapted to the change of the force of the cutting wire and is adapted to the pulling angle of the cutting wire. This reduces the deflection of the cutting wire between the tension wheel and the wire winding/unwinding rollers when the cutting wire deviates from the preset trajectory, reduces friction between the cutting wire and the tension wheel, reduces the wear between the tension wheel and the cutting wire, and reduces the risk of the cutting wire dislodgement or breakage, which is beneficial to improve the quality and efficiency of cutting.

Further, the wire winding/unwinding roller of the wire saw unit of the present disclosure realizes the wire arrangement by the axial reciprocal movement. However, due to factors such as assembly precision and control timeliness, the movement distance of the wire winding/unwinding roller may inevitably deviate from the preset wire arrangement distance, which causes the cutting wire between the tension wheel and the wire winding/unwinding roller to deviate from a preset trajectory and thus become offset. When the cutting wire entering or leaving the wire groove of the tension wheel becomes offset, that is, when the cutting wire deviates from the center of the wire groove, the tension wheel is stressed due to the deflection of the cutting wire and rotates together with the tension rotation assembly relative to the tension swing arm assembly, during which the detection device 6 detects in real time the distance from the detection device 6 to the tension wheel. The controller obtains the detection distance sent by the detection device 6 and compares the detection distance data with the preset distance. When the detection distance is larger than the preset distance, a difference between the detection distance and the preset distance is obtained, and accordingly, a control parameter for axial movement of the wire winding/unwinding roller is calculated. Based on this, the axial movement speed and/or the movement distance of the wire winding/unwinding roller 31 is adjusted, thereby reducing or eliminating the wire arrangement error to adjust the speed of axial movement of the wire winding/unwinding roller.

Specifically, the wire winding/unwinding roller 31 is cylindrical. In the ideal state that the cutting wire is not deflected, the plane where the tension wheel 21 is located is parallel to the cross section of the wire winding/unwinding roller 31. When the cutting wire is deflected, there is an angle between the plane where the tension wheel 21 is located and the cross section of the wire winding/unwinding roller 31, and the angle is between 0° to 90°.

In a specific solution, two tension mechanisms and two wire winding/unwinding mechanisms are provided, wherein each of the two tension mechanisms and each of the two wire winding/unwinding mechanisms are located on each of the two sides of the cutting mechanism respectively, and the wire winding/unwinding roller is lower than the tension wheel on the same side.

The embodiment further provides a wire-cutting machine, including the above wire saw unit. Specifically, the wire-cutting machines can be slicers.

The solutions of the wire saw unit and wire-cutting machine can be referred to in the above contents. The wire saw unit and wire-cutting machine provided by the embodiment have the same technical effects as the above tension mechanism.

In the description of the present disclosure, the terms "first" and "second" are used only for descriptions and are not to be understood as indicating or implying a relative importance or implicitly specifying the number of technical features indicated.

In the present disclosure, unless other expressly specifications and limitations, the terms "mount", "connect", and "link" are to be understood in a broad sense, e.g. it can be a fixed connection, a detachable connection, or can be integral; it can be a mechanical connection, an electrical connection, or a communication each other; it can be a direct connection, an indirect connection through an intermediate medium; and it can be a communication inside two components or interaction relationships between two component. For a person of ordinary skill in the art, the specific meaning of the above terms in the present disclosure may be understood according to specific situations.

Although preferred embodiments of the present disclosure have been described, those skilled in the art can make additional changes and modifications to these embodiments once they have learned the basic creative concepts. Therefore, the appended claims are intended to be construed to include the preferred embodiments as well as all changes and modifications falling within the scope of the present disclosure.

Obviously, those skilled in the art can make various changes and variations to the present disclosure without departing from the spirit and scope of the present disclosure. In this way, if these modifications and variations of the present disclosure fall within the scope of the claims of the present disclosure and its equivalent technology, the present disclosure also intends to include these modifications and variations.

## Claims

1. A tension mechanism, comprising a tension swing arm assembly, and a driving assembly capable of providing torque to the tension swing arm assembly, wherein the tension mechanism satisfies one of following conditions:
(1) the tension mechanism further comprises:
a tension rotation assembly, rotatably connected to the tension swing arm assembly; and
a tension wheel capable of being wound by a cutting wire, wherein the tension wheel is rotatably connected to the tension rotation assembly, and the tension wheel drives the tension rotation assembly to rotate together relative to the tension swing arm assembly when the tension wheel is stressed due to deflection of the cutting wire; or
(2) the tension mechanism further comprises:
a tension base, wherein the tension swing arm assembly is rotatably connected to the tension base; and
a tension wheel capable of being wound by a cutting wire, rotatably connected to the tension swing arm assembly, wherein
the tension swing arm assembly is connected to the driving assembly by a rotation mechanism for adjusting a rotation of the tension swing arm assembly relative to the tension base, so as to adjust a tension of the cutting wire, and the driving assembly is further connected to the tension base by the rotation mechanism, so that the tension wheel rotates together with the tension swing arm assembly and the tension base relative to the driving assembly when the tension wheel is stressed due to the deflection of the cutting wire.

2. The tension mechanism according to claim 1, wherein, when the tension mechanism satisfies the condition (1), the tension wheel is provided with a wire groove capable of winding the cutting wire; and
a rotation axis of the tension rotation assembly relative to the tension swing arm assembly is located in a plane where the wire groove is located, or the rotation axis of the tension rotation assembly relative to the tension swing arm assembly is parallel to the plane where the wire groove is located.

3. The tension mechanism according to claim 1, wherein, when the tension mechanism satisfies the condition (1), the tension swing arm assembly comprises:
at least two tension swing arms, wherein one end of each of the two tension swing arms is fixedly connected to the driving assembly, and another end of each of the two tension swing arms is provided at an angle and pivotally connected to the tension rotation assembly;
preferably, an end of the tension swing arm, connected to the tension rotation assembly, is provided with a rotation connection structure, and the tension rotation assembly is rotatably connected to the tension swing arms via the rotation connection structure; and
preferably, the rotation connection structure is a connection hole arranged at the end of the tension swing arm, and the tension rotation assembly is rotatably arranged within the connection hole.

4. The tension mechanism according to claim 3, wherein the tension rotation assembly comprises:
a first rotation arm, wherein two ends of the first rotation arm are pivotally connected to ends of the two tension swing arms respectively; and
a second rotation arm, connected between the first rotation arm and the tension wheel.

5. The tension mechanism according to claim 4, wherein a rotary shaft is arranged on an end of the first rotation arm; the rotary shaft is rotatably arranged in the connection hole of the tension swing arm; and a bearing is arranged between the rotary shaft and the connection hole.

6. The tension mechanism according to claim 5, wherein the rotary shaft of one end of the first rotation arm is provided with a wire passing hole for the cutting wire to pass through.

7. The tension mechanism according to claim 5, wherein a rotation damper is arranged between one end or two ends of the first rotation arm and a corresponding connection hole.

8. The tension mechanism according to claim 1, wherein, when the tension mechanism satisfies the condition (1), the tension swing arm assembly comprises the tension swing arms and mounting bases; each of the mounting bases is arranged on one end of each of the tension swing arms; and the tension rotation assembly is rotatably connected to the mounting base.

9. The tension mechanism according to claim 8, wherein two mounting bases are provided; the two mounting bases are arranged on a same end of the tension swing arms; the two mounting bases are arranged opposite to each other on the end of the tension swing arm; the tension rotation assembly is located between the two mounting bases; and two ends of the tension rotation assembly are rotatably connected to the mounting bases respectively by a rotary shaft.

10. The tension mechanism according to claim 9, wherein the tension rotation assembly comprises:
a shaft box body, wherein the rotary shaft passes through the shaft box body to rotatably connect to the shaft box body by a bearing; and
a tension wheel connection arm, one end of which is connected to the shaft box body, and another end of which is connected to the tension wheel.

11. The tension mechanism according to claim 10, wherein the tension wheel is provided with a wire groove capable of being wound by the cutting wire, and a rotation axis of the shaft box body is not located in a plane where the wire groove is located; and
preferably, the rotation axis of the shaft box body is located on one side of the plane where the wire groove is located close to the tension swing arms.

12. The tension mechanism according to claim 1, wherein, when the tension mechanism satisfies the condition (2), the tension wheel is provided with a wire groove configured for being wound by the cutting wire; an axis of which the tension wheel, the tension swing arm assembly, and the tension base rotate together relative to the driving assembly is located on the plane where the wire groove is located, or parallel to the plane where the wire groove is located.

13. The tension mechanism according to claim 1, wherein, when the tension mechanism satisfies the condition (2), the tension mechanism further comprises:
a tension transmission mechanism, arranged between the tension swing arm assembly and the driving assembly, configured to transmit a rotational action of the driving assembly to the tension swing arm assembly to rotate the tension swing arm assembly relative to the tension base.

14. The tension mechanism according to claim 13, wherein the rotation mechanism is a universal rotation mechanism; the rotation mechanism comprises an output shaft and an input shaft; the input shaft and the output shaft are connected to each other by a universal adjustment assembly; the input shaft is connected to the driving assembly; the output shaft is connected to the tension transmission mechanism; and the output shaft is further arranged on the tension base, so that the tension base rotates relative to the driving assembly.

15. The tension mechanism according to claim 14, wherein the tension swing arm assembly comprises: a first swing arm, one end of which is rotatably connected to the tension base, and an opposite other end of which is connected to the tension wheel; and a second swing arm connected to the first swing arm, wherein the tension transmission mechanism is connected between the second swing arm and the driving assembly;
preferably, the tension transmission mechanism comprises: a driving transmission member connected to an end of the output shaft, and a driven transmission member arranged on the second swing arm, wherein the driving transmission member cooperates with the driven transmission member to transmit the rotational action of the driving assembly to the driven transmission member;
preferably, the driving transmission member is a driving gear, and the driven transmission member is a driven gear, wherein the driving gear is engaged with the driven gear; and
preferably, a through hole is provided to pass through the driving gear along a thickness direction of the driving gear; the tension base is provided with a limiting member; and the limiting member is inserted into the through hole to limit a rotational stroke of the driving gear.

16. The tension mechanism according to claim 5, wherein the tension base comprises: a first mounting base having a space inside to accommodate the output shaft, wherein the output shaft passes through the space of the first mounting base in a rotating manner; and a mounting arm, one end of which is fixed to the first mounting base and another end of which is rotatably connected to one end of the first swing arm; and
preferably, the tension base further comprises a second mounting base connected to the first mounting base, and the second mounting base is provided with a rotation damper.

17. The tension mechanism according to claim 1, further comprising:
a counterweight assembly, connected to the tension rotation assembly or the tension base and configured to stabilize the tension wheel during rotation.

18. A wire saw unit, comprising:
a cutting mechanism;
a wire winding/unwinding mechanism comprising a wire winding/unwinding roller for storing or releasing a cutting wire; and
the tension mechanism according to any one of claims 1-17; and
the cutting wire moves reciprocally between the wire winding/unwinding roller, the tension wheel, and the cutting mechanism.

19. The wire saw unit according to claim 18, wherein the wire saw unit satisfies at least one of following conditions:
(1) the tension wheel being able to move reciprocally in an axial direction to enable a corresponding arrangement of the wire winding/unwinding roller for wire winding, so as to guide the cutting wire wound out of the tension wheel to the wire winding/unwinding roller, or to guide the cutting wire released by the wire winding/unwinding roller to the tension wheel;
(2) two tension mechanisms and two wire winding/unwinding mechanisms being provided, wherein each of the two tension mechanisms and each of the two wire winding/unwinding mechanisms are located on two sides of the cutting mechanism respectively; or
(3) the wire winding/unwinding roller being lower than the tension wheel on a same side.

20. A wire-cutting machine, comprising the tension mechanism according to any one of claims 1-17 or the wire saw unit according to claim 18 to 19, preferably, the wire-cutting machine is a slicer.
